(19) Europäisches Patentamt
European Patent Office
Office européen des brevets

(11) EP 2 511 679 A1

(12) EUROPEAN PATENT APPLICATION
published in accordance with Art. 153(4) EPC

(43) Date of publication:
**17.10.2012 Bulletin 2012/42**

(21) Application number: **10835931.6**

(22) Date of filing: **06.12.2010**

(51) Int Cl.:
***G01J 1/02*** *(2006.01)* ***G01J 1/04*** *(2006.01)*
***G08B 17/12*** *(2006.01)*

(86) International application number:
**PCT/JP2010/071813**

(87) International publication number:
**WO 2011/071011 (16.06.2011 Gazette 2011/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2009 JP 2009279693**

(71) Applicant: **Panasonic Corporation**
**Kadoma-shi**
**Osaka 571-8501 (JP)**

(72) Inventors:
- **NISHIKAWA, Takayuki**
**Osaka 540-6207 (JP)**
- **WATABE, Yoshifumi**
**Osaka 540-6207 (JP)**
- **INABA, Yuichi**
**Osaka 540-6207 (JP)**
- **HIRAI, Takahiko**
**Osaka 540-6207 (JP)**

(74) Representative: **Appelt, Christian W.**
**Boehmert & Boehmert**
**Pettenkoferstrasse 20-22**
**80336 München (DE)**

# (54) INFRARED FLAME DETECTOR

(57) An infrared flame detector of the present invention has an infrared radiation receiving element accommodated in a package. In the infrared radiation receiving element, a set of two pyroelectric elements are arranged side by side and connected in anti-series on a pyroelectric element forming substrate. An infrared optical filter includes a filter forming substrate made of an infrared radiation transmitting material, a set of two narrowband transmission filter sections formed at positions respectively corresponding to positions of the pyroelectric elements on a first surface of the filter forming substrate and configured to transmit infrared radiation of a first selective wavelength defined as a specific wavelength of infrared radiation generated by resonance radiation of $CO_2$ gas resulting from a flame and infrared radiation of a second selective wavelength defined as a reference wavelength different from the specific wavelength, and a broadband blocking filter section formed on a second surface of the filter forming substrate and configured to absorb infrared radiation of a wavelength longer than an upper limit of an infrared reflection band defined by the narrowband transmission filter sections. Each narrowband transmission filter section has a wavelength selection layer that is interposed between a first λ/4 multilayer film and a second λ/4 multilayer film and has an optical film thickness selected according to the selective wavelength.

FIG. 1 A

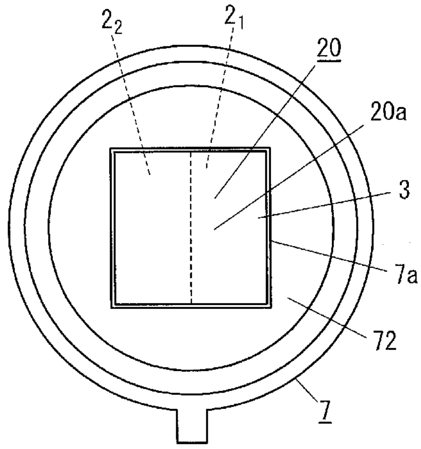


EP 2 511 679 A1

FIG. 1 B

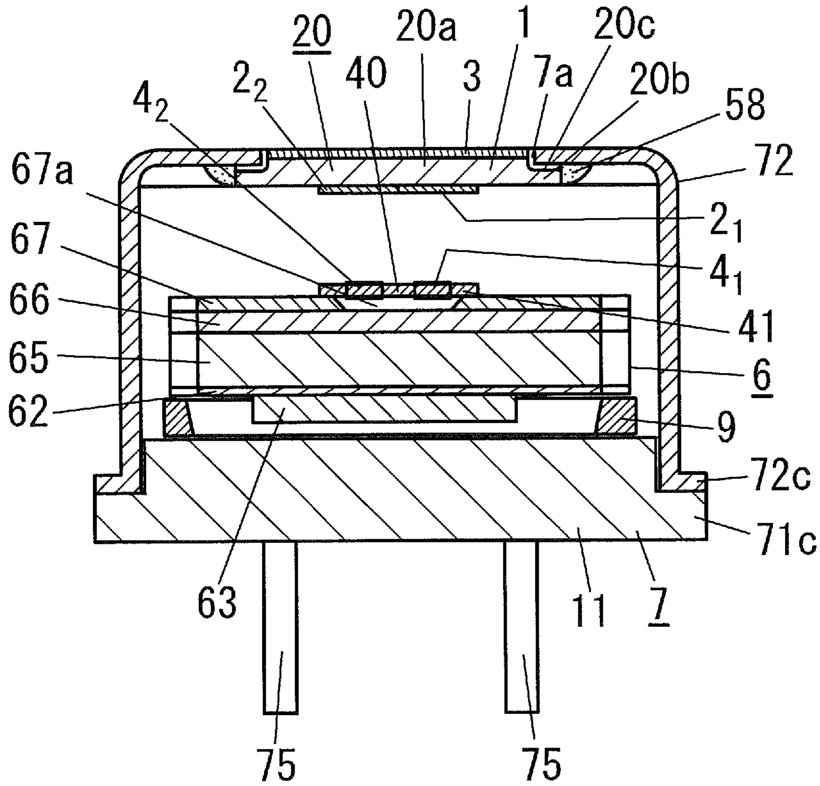
20
20a
1
20c
2₂
40
3
7a
20b
4₂
58
67a
72
2₁
67
4₁
66
41
65
6
62
9
72c
71c
63
11
7
75
75

## Description

### TECHNICAL FIELD

The present invention relates to an infrared flame detector.

### BACKGROUND ART

Conventionally, there is studied and developed, in various organizations, an infrared flame detector that performs flame detection by detecting infrared radiation of a specific wavelength (4.3 μm or 4.4 μm) generated by resonance radiation (also referred to as $CO_2$ resonance radiation) of carbon dioxide ($CO_2$ gas) in a flame in a fire (e.g., Japanese Patent Application Laid-open No. H3-78899: Patent Document 1).

It is widely known that, as shown in FIG. 23, the infrared radiation generated by the $CO_2$ resonance radiation has a relative intensity spectrum distribution significantly different from that of infrared radiation emitted from sunlight, a high-temperature object, or a low-temperature object, the amount of the emitted infrared radiation constantly fluctuates, and the fluctuation frequency is concentrated in a range of 1 to 15 Hz (e.g., The Society of Heating, Air-Conditioning and Sanitary Engineers of Japan, "2. Three-wavelength Infrared Flame Detector", online, retrieved on March 21, 2009, the Internet URLhttp://www.shasej.org/gakkaishi/0109/0109-koza-02.html: Non-Patent Document 1).:

Non-Patent Document 1 mentioned above discloses a three-wavelength infrared flame detector having the structure shown in FIG. 24. The three-wavelength infrared flame detector includes three optical filters (infrared optical filters) $220_1$, $220_2$, and $220_3$ that selectively transmit infrared radiations of three wavelength ranges (4.0 μm, 4.4 μm, 5.0 μm) of a $CO_2$ resonance radiation band, and three infrared sensors $240_1$, $240_2$, and $240_3$ that separately receive the infrared radiations transmitted through the optical filters $220_1$, $220_2$, and $220_3$. In addition, the three-wavelength infrared flame detector includes three signal amplification sections $250_1$, $250_2$, and $250_3$ having electrical band-pass filters that transmit only flicker frequency components of 1 to 10 Hz of respective outputs of the infrared sensors $240_1$, $240_2$, and $240_3$ and selectively amplify only the frequency components. Further, the three-wavelength infrared flame detector includes a fire determination section & control section 260 configured to calculate magnitudes of signal values outputted from the signal amplification sections $250_1$, $250_2$, and $250_3$ and ratios among the signal values by using an original algorithm, and determine that a fire occurs only when a spectrum peak pattern of the resonance radiation of $CO_2$ emitted from a flame is detected to send a fire signal to an alarm signal output section 270. The above-described Non-Patent Document 1 describes that the three-wavelength infrared flame detector has a very high selection capability to the flame and does not react to natural light or artificial illumination of a fluorescent lamp, a sodium lamp, or a mercury lamp.

However, the three-wavelength infrared flame detector disclosed in Non-Patent Document 1 described above includes, as individual components, the optical filters $220_1$, $220_2$, and $220_3$, and the infrared sensors $240_1$, $240_2$, and $240_3$. As a result, in the three-wavelength infrared flame detector, the size of a container (not shown) that has the optical filters $220_1$, $220_2$, and $220_3$ attached thereto and contains the infrared sensors $240_1$, $240_2$, and $240_3$ is much larger than that of a can package of the infrared flame detector described in Patent Document 1 described above.

On the other hand, as shown in FIGS. 25A and 25B, the infrared flame detector disclosed in Patent Document 1 described above includes a disk-like insulating substrate 171 in which four infrared radiation detecting elements $40_1$, $40_2$, $40_3$, and $40_4$ are disposed, a metal cap 172 coupled to the insulating substrate 171, and an infrared optical filter 20' that is disposed so as to close a light transmission window 7a formed in the front wall of the cap 172 and has band-pass filter sections $202_1$, $202_2$, $202_3$, and $202_4$ having mutually different transmission wavelength bands at positions corresponding to those of the individual infrared radiation detecting elements $40_1$, $40_2$, $40_3$, and $40_4$. In the infrared flame detector, the can package is constituted by the insulating substrate 171 and the cap 172. In the infrared flame detector having the structure shown in FIGS. 25A and 25B, the transmission wavelength band of one of the four band-pass filter sections $202_1$, $202_2$, $202_3$, and $202_4$ is set such that infrared radiation of 4.3 μm is transmitted. In addition, the infrared optical filter 20' is formed by selectively depositing a multilayer film designed according to transmission characteristics of each of the band-pass filter sections $202_1$, $202_2$, $202_3$, and $202_4$ four times on a single glass substrate, or bonding the four fan-shaped band-pass filter sections $202_1$, $202_2$, $202_3$, and $202_4$ to one another.

Further, as an infrared gas detector, as shown in FIG. 26, there is conventionally known one including two infrared optical filters $20_1$ and $20_2$, two infrared radiation receiving elements $40_1$ and $40_2$, and a package 7 that accommodates the infrared optical filters $20_1$ and $20_2$ and the infrared radiation receiving elements $40_1$ and $40_2$ in which transmission wavelength ranges of the two infrared optical filters $20_1$ and $20_2$ are set so as to separately transmit infrared radiation of an absorption wavelength of a detection-target gas and infrared radiation of a wavelength set as that of reference light, and it can be considered that the infrared gas detector of this type is used as the infrared flame detector. Note that a can package constituted by a metal stem 71 and a metal cap 72 is used as the package 7, and the infrared optical filters $20_1$ and $20_2$ are attached to the cap 72 so as to close two light transmission windows provided in the cap 72.

However, in the structure shown in FIG. 26, since the two infrared optical filters $20_1$ and $20_2$ having different transmission wavelength ranges are constituted by separate components, there is a problem that the number of components is increased, separate steps of mounting the two infrared optical filters $20_1$ and $20_2$ in the package 7 are required, and the cost is thereby increased. In addition, a portion for bonding each of the infrared optical filters $20_1$ and $20_2$ is necessary in the package 7 so that it is difficult to reduce the size of the package 7.

In contract to this, as an infrared radiation reception module that is accommodated and used in the package of the infrared gas detector, as shown in FIG. 27, there is proposed an infrared radiation reception module in which two infrared radiation receiving elements $400_1$ and $400_2$ are formed on one surface side of a substrate 300 constituted by an MgO substrate, and narrowband transmission filter sections $200_1$ and $200_2$ having mutually different transmission wavelengths are stacked on the infrared radiation receiving elements $400_1$ and $400_2$ (Japanese Patent Application Laid-open No. H7-72078: Patent Document 2). The infrared radiation receiving elements $400_1$ and $400_2$ and the narrowband transmission filter sections $200_1$ and $200_2$ are formed by using a sputtering method or the like. The infrared radiation receiving elements $400_1$ and $400_2$ are constituted by pyroelectric elements including lower electrodes $401_1$ and $401_2$ composed of a Pt film, pyroelectric films $402_1$ and $402_2$ formed on the lower electrodes $401_1$ and $401_2$ and composed of a $PbTiO_3$ film, and upper electrodes $403_1$ and $403_2$ formed on the pyroelectric films $402_1$ and $402_2$ and composed of an NiCr film. In addition, as the combination of materials of a plurality of types of thin films constituting multilayer films serving as the narrowband transmission filter sections $200_1$ and $200_2$, the combination of materials selected from the group consisting of Si, Ge, Se, Te, LiF, NaF, $CaF_2$, and $MgF_2$ and the like are adopted. Note that, in the infrared optical module having the structure shown in FIG. 27, the lower electrodes $401_1$ and $401_2$ of the two infrared radiation receiving elements $400_1$ and $400_2$ are formed integrally with each other and electrically connected to each other.

Further, conventionally, there is proposed an infrared gas detector having the structure shown in FIGS. 28A and 28B (Japanese Patent Application Laid-open No. H3-205521: Patent Document 3). In the infrared gas detector, there are accommodated, in a package 7, an infrared optical filter module 5 formed by bonding together adjacent side surfaces of a plurality of infrared optical filters $20_1$, $20_2$, $20_3$, and $20_4$ configured to have mutually different transmission wavelengths and the same thickness via an adhesive layer 19 made of an adhesive (see FIG. 28C), and a plurality of infrared radiation receiving elements $40_1$, $40_2$, $40_3$, and $40_4$ that receive infrared radiations transmitted through the infrared optical filters $20_1$, $20_2$, $20_3$, and $20_4$. The package 7 is composed of a CAN package constituted by a metal stem 71 and a metal cap 72. In addition, in the infrared gas detector, a light transmission window 7a provided in the front wall of the cap 72 is closed by an infrared radiation transmitting member 80 constituted by a sapphire substrate, and $N_2$ or dry air is sealed in the package 7.

In each of the infrared optical filters $20_1$, $20_2$, $20_3$, and $20_4$ disclosed in Patent Document 3 described above, as shown in FIG. 28C, a narrowband transmission filter section 2' that transmits a predetermined wavelength band of infrared radiation is formed on one surface side of a filter forming substrate 1 constituted of an Si substrate and, in order to remove noise components in a band other than the transmission band of the narrowband transmission filter section 2', a broadband blocking filter section 3' that blocks a short wavelength band and a long wavelength band of the infrared radiation is formed on the other surface side of the filter forming substrate 1. In addition, the above-described Patent Document 3 describes that each of the narrowband transmission filter section 2' and the broadband blocking filter section 3' is formed of a multilayer film composed of Ge and SiO.

Incidentally, in the infrared flame detector, it is necessary to set the center wavelength of the narrowband filter section that selectively transmits the infrared radiation of 4.3 $\mu$m generated by the resonance radiation of $CO_2$ gas to 4.3 $\mu$m, set the transmission bandwidth thereof to about 0.2 $\mu$m, and the infrared flame detector is required to be able to detect a flame in the size of that of a lighter at a distance of 10 m or more.

Accordingly, in the field of the infrared flame detector, as the infrared radiation receiving element, a pyroelectric element or a thermopile capable of high-sensitivity measurement is used in many cases. Examples of a method for amplifying the output of the pyroelectric element include a current-voltage conversion circuit using an FET and a resister connected to the gate of the FET, and a current-voltage conversion circuit having a capacitor connected between an output terminal of an operational amplifier and an inverting input terminal thereof (Japanese Patent Application Laid-open No. H10-281866: Patent Document 4).

## DISCLOSURE OF THE INVENTION

### PROBLEMS TO BE SOLVED BY THE INVENTION

Incidentally, it can be considered that the infrared gas detector having the structure shown in FIGS. 28A and 28B disclosed in Patent Document 3 described above is used as the infrared flame detector. However, in its production, it is necessary to form a plurality of types of the infrared optical filters $20_1$, $20_2$, $20_3$, and $20_4$ having different filter characteristics in mutually different wafers, dice the infrared optical filters $20_1$, $20_2$, $20_3$, and $20_4$ from the individual wafers, and then bond the infrared optical filters $20_1$, $20_2$, $20_3$, and $20_4$ having different filter characteristics to one another by using the adhesive 19. As a result, in such infrared flame detector, the cost thereof is high, it is difficult to reduce the size of the infrared optical element module constituted by a plurality of the infrared optical elements $40_1$, $40_2$, $40_3$, and $40_4$, and the distance between the centers of the infrared radiation receiving elements $40_1$, $40_2$, $40_3$, and $40_4$ is increased so that a difference in optical path length among the infrared radiations reaching the infrared radiation receiving elements $40_1$, $40_2$, $40_3$, and $40_4$ is increased. That is, in such infrared flame detector, a difference in optical path length between detected light having infrared radiation of 4.3 $\mu$m as a first selective wavelength and reference light having infrared radiation of a second selective wavelength other than the first selective wavelength is disadvantageously increased. In addition, in such infrared flame detector, the light receiving efficiency of each of the infrared radiation receiving elements $40_1$, $40_2$, $40_3$, and $40_4$ is lowered.

Additionally, in the infrared gas detector having the structure shown in FIGS. 28A and 28B, since the light transmission window 7a provided in the front wall of the cap 72 is closed by the infrared radiation transmitting member 80 constituted by the sapphire substrate, far-infrared radiation of ambient light such as sunlight or illumination light that causes noises can be blocked by the infrared radiation transmitting member 80. However, the number of steps required for the assembly is increased with an increase in the number of components and, in addition, the sapphire substrate is expensive and difficult to processing such as dicing so that the cost is increased. Further, when the number of layers of the multilayer film in each of the infrared optical filters $20_1$, $20_2$, $20_3$, and $20_4$ is increased, although the far-infrared radiation can be blocked while the narrowband band-pass filter is realized, the cost is increased.

Furthermore, in the infrared gas detector having the structure shown in FIGS. 28A and 28B, when a conductive adhesive such as a silver paste or the like is used as the adhesive 19 for conduction of electricity among the infrared optical filters $20_1$, $20_2$, $20_3$, and $20_4$, the mechanical strength thereof is lowered. Moreover, as in the infrared flame detector having the structure shown in FIGS. 25A and 25B, in the case of the infrared flame detector in which the infrared optical filter 20' is formed by selectively depositing the dielectric multilayer film designed according to transmission characteristics of each of the band-pass filter sections $202_1$, $202_2$, $202_3$, and $202_4$ four times on the single glass substrate, since it is necessary to sequentially form the multilayer films constituting the individual band-pass filter sections $202_1$, $202_2$, $202_3$, and $202_4$, there is a problem that the production cost is increased. In addition, in the case of the infrared flame detector in which the infrared optical filter 20' is formed by bonding the four fan-shaped band-pass filter sections $202_1$, $202_2$, $202_3$, and $202_4$ to one another, it is necessary to separately form the band-pass filter sections $202_1$, $202_2$, $202_3$, and $202_4$ having different transmission characteristics and form them into the fan shape so that there is a problem that the production cost is increased and the mechanical strength is lowered.

Further, in the structure shown in FIGS. 28A and 28B, the peripheral portions of one surface and the other surface of each of the infrared optical filters $20_1$, $20_2$, $20_3$, and $20_4$ are exposed. As a result, in this structure, in order to prevent unnecessary infrared radiation from entering into the infrared radiation receiving elements $40_1$, $40_2$, $40_3$, and $40_4$, it is necessary to provide a plurality of accommodation sections $90_1$, $90_2$, $90_3$, and $90_4$ in a holder 90 holding the plurality of the infrared radiation receiving elements $40_1$, $40_2$, $40_3$, and $40_4$ to separately accommodate the infrared radiation receiving elements $40_1$, $40_2$, $40_3$, and $40_4$ in the individual accommodation sections $90_1$, $90_2$, $90_3$, and $90_4$.

In contrast to this, in the infrared optical module having the structure shown in FIG. 27 disclosed in Patent Document 2 described above, the two infrared radiation receiving elements $400_1$ and $400_2$ are formed on one surface side of the substrate 300 constituted by the MgO substrate, and the narrowband transmission filter sections $200_1$ and $200_2$ having mutually different transmission wavelengths are stacked on the infrared radiation receiving elements $400_1$ and $400_2$. Consequently, in the infrared optical module, it is possible to reduce the distance between the centers of the narrowband transmission filter sections $200_1$ and $200_2$, reduce the difference in optical path length between the infrared radiation of the first selective wavelength (4.3 $\mu$m) and the infrared radiation (reference light) of the second selective wavelength other than the first selective wavelength, and achieve a reduction in cost.

However, in the infrared optical module having the structure shown in FIG. 27, although each of the infrared radiation receiving elements $400_1$ and $400_2$ is a thermal infrared radiation receiving element such as the pyroelectric element or the like, the narrowband transmission filter sections $200_1$ and $200_2$ are stacked directly on the infrared radiation receiving elements $400_1$ and $400_2$. As a result, in the infrared optical module, the thermal capacity is increased and it becomes difficult to secure thermal insulation properties so that response and sensitivity are lowered.

In addition, in the amplification circuit constituted by the current-voltage conversion circuit described in Patent Document 4 described above, although it is necessary to separately amplify the outputs of the individual infrared radiation receiving elements, since the outputs of the individual infrared radiation receiving elements include a DC bias component resulting from ambient light such as sunlight, arc light, and infrared radiations from a fluorescent lamp and a heat source, when the intensity of the infrared radiation entering into the infrared radiation receiving element is extremely high, enhancement in the gain of the amplification circuit is limited due to the saturation of the output of the amplification circuit and an improvement in S/N ratio is also limited so that there is a possibility that there are cases where a fire cannot be detected in the infrared flame detector. Similarly, in the three-wavelength flame detector shown in FIG. 24 as well, when the intensity of the infrared radiation entering into each of the infrared sensors $240_1$, $240_2$, and $240_3$ is extremely high, the saturation of the signal in the signal amplification section $250_1$, $250_2$, or $250_3$ occurs, an improvement in S/N ratio is limited and sensitivity is lowered so that there is a possibility that there are cases where a fire cannot be detected.

Further, since the pyroelectric element is what is called a differentiation type detecting element that absorbs infrared radiation as thermal energy and detects a change in electric charge amount resulting from the absorption (pyroelectric effect), the pyroelectric element can detect only the changed portion of the infrared radiation so that it is necessary to detect infrared radiation of a low frequency of about 0.1 to 10 Hz. However, the impedance of the above-described current-voltage conversion circuit is 100 GΩ to 1 TΩ that is extremely high so that the current-voltage conversion circuit is effective in realizing high S/N by the high impedance, but is susceptible to the influence of external radiant noises due to its high impedance.

The present invention has been achieved in view of the above-described problems, and an object thereof is to provide an infrared flame detector capable of achieving an increase in sensitivity and a reduction in cost.

## MEANS FOR SOLVING THE PROBLEMS

The infrared flame detector in accordance with the present invention includes an infrared radiation receiving element accommodated in a package, and an infrared optical filter disposed forwardly of the infrared radiation receiving element in the package. The infrared radiation receiving element includes a set of two pyroelectric elements having mutually different polarities. The two pyroelectric elements are arranged side by side on a pyroelectric element forming substrate and are connected in anti-series or anti-parallel. The infrared optical filter includes a filter forming substrate, a set of two narrowband transmission filter sections, and a broadband blocking filter section. The filter forming substrate is made of an infrared radiation transmitting material. The two narrowband transmission filter sections are formed at positions respectively corresponding to the pyroelectric elements on a first surface of the filter forming substrate. The two narrowband transmission filter sections are configured to transmit infrared radiation of a first selective wavelength defined as a specific wavelength of infrared radiation generated by resonance radiation of $CO_2$ gas resulting from a flame and infrared radiation of a second selective wavelength defined as a reference wavelength different from the specific wavelength, respectively. The broadband blocking filter section is formed on a second surface of the filter forming substrate. The broadband blocking filter is configured to absorb infrared radiation of a wavelength longer than an upper limit of an infrared reflection band defined by the narrowband transmission filter sections. Each of the narrowband transmission filter sections includes a first λ/4 multilayer film, a second λ/4 multilayer film, and a wavelength selection layer. The first λ/4 multilayer film is formed by stacking a plurality of types of thin films having different refractive indexes and the same optical film thicknesses on each other. The second λ/4 multilayer film is formed on an opposite side of the first λ/4 multilayer film from the filter forming substrate. The second λ/4 multilayer film is formed by stacking the plurality of types of the thin films on each other. The wavelength selection layer is interposed between the first λ/4 multilayer film and the second λ/4 multilayer film. The wavelength selection layer is designed to have an optical film thickness different from the optical film thicknesses of the thin film according to the selective wavelength.

Preferably, in this infrared flame detector, the broadband blocking filter section is constituted by a multilayer film formed by stacking multiple types of thin films having different refractive indexes on each other. At least one of the multiple types of the thin films is formed of an infrared absorbing material having a property of absorbing far-infrared radiation.

Preferably, in this infrared flame detector, the filter forming substrate is an Si substrate or a Ge substrate.

Preferably, in this infrared flame detector, the package is made of metal, and the filter forming substrate is electrically connected to the package.

Preferably, in this infrared flame detector, a component of an amplification circuit configured to amplify an output of the infrared radiation receiving element is accommodated in the package.

## BRIEF DESCRIPTION OF THE DRAWINGS

FIG. 1A is a schematic plan view of an infrared flame detector of an embodiment;
FIG. 1B is a schematic cross-sectional view of the infrared flame detector;
FIG. 2 is a schematic exploded perspective view of the infrared flame detector;
FIG. 3A is a schematic plan view of an infrared radiation receiving element in the infrared flame detector;
FIG. 3B is a circuit diagram of the infrared radiation receiving element;
FIG. 3C is a circuit diagram of another structural example of the infrared radiation detecting element;
FIG. 4 is a schematic cross-sectional view of an infrared optical filter in the infrared flame detector;
FIG. 5 is an explanatory view of the relationship between a designed center wavelength and a reflection band in the infrared optical filter;
FIG. 6 is a view of a transmission spectrum of a refractive index periodic structure for explaining a reflection bandwidth of the infrared optical filter;

FIG. 7 is an explanatory view of the relationship between a refractive index of a low refractive index material and the reflection bandwidth in the refractive index periodic structure;

FIG. 8 is a schematic cross-sectional view showing a basic structure of a filter main body section of the infrared optical filter;

FIG. 9 is an explanatory view of characteristics of the basic structure;

FIG. 10 is an explanatory view of characteristics of the basic structure;

FIG. 11 is a view of a transmission spectrum of a thin film formed of a far-infrared radiation absorbing material in the infrared optical filter;

FIGS. 12A to 12D are cross-sectional views of principal steps for explaining a method of producing the infrared optical filter;

FIG. 13 is a view of a transmission spectrum of a portion constituted by two narrowband transmission filter sections of the infrared optical filter;

FIG. 14 is a view showing a result of analysis of a film quality of a thin film formed by using an ion beam assisted deposition apparatus by FT-IR (Fourier-transform infrared spectroscopy);

FIG. 15A is a view of a transmission spectrum of a reference example where an Al2O3 film having a film thickness of 1 □m is deposited on an Si substrate;

FIG. 15B is an explanatory view of optical parameters (refractive index, absorption coefficient) of the Al2O3 film calculated based on the view of the transmission spectrum of FIG. 15A;

FIG. 16 is a view of a transmission spectrum of the infrared optical filter;

FIG. 17 is a view of a transmission spectrum of a broadband blocking filter section of the infrared optical filter;

FIG. 18 is a schematic structural view of an infrared flame detection apparatus using the infrared flame detector;

FIG. 19 is a schematic structural view of an infrared flame detection apparatus using an infrared flame detector of a comparative example;

FIG. 20 is an explanatory view of the relationship between a temperature and radiant energy of an object;

FIG. 21 is an explanatory view of transmission characteristics of Si;

FIG. 22 is an explanatory view of transmission characteristics of Ge;

FIG. 23 is an explanatory view of the relationship between an intensity wavelength distribution of an infrared radiation generation source and a detection wavelength band of a three-wavelength infrared flame detector of the conventional art;

FIG. 24 is a block diagram of the three-wavelength flame detector of the conventional art;

FIG. 25A is a schematic perspective view of another infrared flame detector of the conventional art;

FIG. 25B is a schematic perspective view of a principal portion of the infrared flame detector;

FIG. 26 is a schematic structural view of an infrared gas detector of the conventional art;

FIG. 27 is a schematic cross-sectional view of a conventional infrared radiation reception module;

FIG. 28A is a schematic longitudinal sectional view of another infrared gas detector of the conventional art;

FIG. 28B is a schematic transverse sectional view of the infrared gas detector; and

FIG. 28C is a schematic side view of an infrared optical filter.

## BEST MODE FOR CARRYING OUT THE INVENTION

As shown in FIGS. 1 and 2, an infrared flame detector of the present embodiment includes an infrared radiation receiving element 40 having a plurality of (two in this embodiment) pyroelectric elements 41 and 42, a circuit block 6 provided with a signal processing circuit configured to process an output of the infrared radiation receiving element 40, and a package 7 constituted by a can package (TO-5 in this embodiment) configured to accommodate the circuit block 6.

The package 7 includes a metal stem 71 on which the circuit block 6 is mounted via a spacer 9 made of an insulating material and a metal cap 72 fixed to the stem 71 so as to cover the circuit block 6, and a plurality of (three in this embodiment) terminal pins 75 electrically connected to appropriate positions of the circuit block 6 are provided so as to extend through the stem 71. The stem 71 is formed into a disk shape, the cap 72 is formed into a bottomed cylindrical shape having an opened rear surface, and the rear surface is closed by the stem 71. Note that the spacer 9, the circuit block 6, and the stem 71 are fixed to one another using an adhesive.

In the above-described cap 72 constituting a part of the package 7, a rectangular (square in the present embodiment) window section 7a is formed in a front wall positioned forwardly of the infrared radiation receiving element 40, and an infrared optical filter 20 is disposed on the inside of the cap 72 so as to cover the window section 7a.

In addition, in the stem 71, a plurality of terminal holes 71b through which the above-described terminal pins 75 are inserted are provided so as to extend through the stem 71 in a thickness direction. The individual terminal pins 75 are inserted into the terminal holes 71b and sealed by sealing sections 74.

The above-described cap 72 and stem 71 are formed of steel plates. An outer brim section 72c provided to extend outward from the rear end edge of the cap 72 is welded to a flange section 71c formed in the periphery of the stem 71 by welding.

The circuit block 6 is constituted by a first circuit board 62, a resin layer 65, a shield plate 66, and a second circuit board 67. The first circuit board 62 is defined as a printed wiring board (e.g., a composite copper-clad laminate) having an IC 63 and chip-like electronic components 64 as constituent elements of the above-described signal processing circuit mounted on different surfaces thereof. The resin layer 65 is stacked on the surface of the first circuit board 62 on which the electronic components 64 are mounted. The shield plate 66 includes an insulating base and a metal layer (hereinafter referred to as a shield layer) formed on a surface of the insulating base. For example, the insulating base is made of glass epoxy resin, and the metal layer is made of a metal material (e.g., copper or the like). The shield layer 66 is stacked on the resin layer 65. The second circuit board 67 is defined as a printed wiring board (e.g., the composite copper-clad laminate) which has the infrared radiation receiving element 40 mounted thereon and is stacked on the shield plate 66. Note that the shield layer formed only of a copper foil or a metal plate may be used as an alternative to the shield plate 66.

In the first circuit board 62, the IC 63 is flip-chip mounted on the lower surface in FIG. 2, and a plurality of the electronic components 64 are mounted on the upper surface in FIG. 2 by reflow soldering.

The above-described infrared radiation receiving element 40 is a dual element in which a set of two pyroelectric elements 41 and 42 having mutually different polarities are arranged side by side on a pyroelectric element forming substrate 41 made of a pyroelectric material (e.g., lithium tantalate or the like) and are connected in anti-series such that a differential output of the two pyroelectric elements 41 and 42 is obtained (see FIG. 3B). In the IC 63, an amplification circuit (band-pass amplifier) configured to amplify an output of a predetermined frequency band (e.g., about 1 to 10 Hz) of the infrared radiation receiving element 40 and a window comparator in the subsequent stage of the amplification circuit are integrated. In the circuit block 6 in the present embodiment, since the above-described shield plate 66 is provided, it is possible to prevent the occurrence of an oscillation phenomenon resulting from capacity coupling of the infrared radiation receiving element 40 and the above-described amplification circuit. In addition, the infrared radiation receiving element 40 may be any element configured to provide the differential output of the set of the two pyroelectric elements 41 and 42. That is, the infrared radiation receiving element 40 is not limited to the set of the two pyroelectric elements 41 and 42 connected in anti-series, and may be, e.g., the set of the two pyroelectric elements 41 and 42 connected in anti-parallel, as shown in FIG. 3C.

In the second circuit board 67, since a thermal insulation hole 67a for thermally insulating the pyroelectric elements 41 and 42 of the infrared radiation receiving element 40 from the second circuit board 67 is provided to extend therethrough in the thickness direction, a gap is formed between the pyroelectric elements 41 and 42 of the infrared radiation receiving element 40 and the shield plate 66, and sensitivity is thereby enhanced. Note that, instead of providing the thermal insulation hole 67a, a support section for supporting the infrared radiation receiving element 40 may also be provided to protrude from the second circuit board 67 such that a gap is formed between the pyroelectric elements 41 and 42 of the infrared radiation receiving element 40 and the second circuit board 67.

In the circuit block 6, through holes 62b, 65b, 66b, and 67b into which the above-described terminal pins 75 are inserted are provided to extend through each of the first circuit board 62, the resin layer 65, the shield plate 66, and the second circuit board 67 in the thickness direction, and the infrared radiation receiving element 40 and the above-described signal processing circuit are electrically connected via the terminal pins 75. Note that, when a component-embedded substrate formation method is adopted in which the first circuit board 62, the resin layer 65, the shield plate 66, and the second circuit board 67 are stacked on one another and the through holes 62b, 65b, 66b, and 67b are formed by performing a one-time perforation process of forming through holes extending through the circuit block 6 in the thickness direction, production steps can be simplified and electrical connections in the circuit block 6 are facilitated.

Among the above-described three terminal pins 75, one of them is an electric power supply terminal pin 75 (75a), another one thereof is a signal output terminal pin 75 (75b), and the remaining one thereof is a ground terminal pin 75 (75c), and the shield layer in the shield plate 66 is electrically connected to the ground terminal pin 75c. The sealing sections 74 (74a, 74b) for sealing the terminal pins 75a and 75b are formed of sealing glass having insulating properties, and the sealing section 74 (74c) for sealing the terminal pin 75c is formed of a metal material. That is, the terminal pins 75a and 75b are electrically insulated from the stem 71, while the ground terminal pin 75c has the same potential as the stem 71. Accordingly, although the potential of the shield plate 66 is set to the ground potential, the potential of the shield plate 66 may be set to a specific potential other than the ground potential as long as the specific potential allows the shield plate 66 to exert its shielding function.

In the production of the infrared flame detector of the present embodiment, after the circuit block 6 on which the infrared radiation receiving element 40 is mounted is attached to the stem 71 via the spacer 9, the inside of the metal package 7 constituted by the cap 72 and the stem 71 may be sealed by welding the outer brim section 72c of the cap 72 to which the infrared optical filter 20 is fixed so as to close the window section 7a and the flange section 71c of the stem 71 to each other. In order to prevent characteristics of the infrared radiation receiving element 40 from being changed by the influence of humidity or the like, dry nitrogen is sealed in the package 7. Note that, as described above, the package 7 in the present embodiment is a can package, and it is possible to achieve an improvement in weather resistance resulting from an improvement in airtightness as well as enhancing a shielding effect to external noises. However, the package 7 may also be constituted by a ceramic package having the shielding effect.

The above-described infrared optical filter 20 has a filter main body section 20a formed with narrowband filter sections $2_1$ and $2_2$ and a broadband blocking filter section 3 described later, and a flange section 20b provided to extend outward from the periphery of the filter main body section 20a and fixed to the periphery of the window section 7a in the cap 72. In the infrared optical filter 20, the plan-view shape of the filter section 20a is rectangular (square in the present embodiment), and the shape of the outer periphery of the flange section 20b is formed into a rectangular (square in the present embodiment) shape. Note that, in the present embodiment, although the plan-view shape of the filter main body section 20a is a square shape of several mm square, the plan-view shape or the dimensions of the filter main body section 20a are not particularly limited.

As shown in FIG. 4, the infrared optical filter 20 includes a filter forming substrate 1 made of an infrared radiation transmitting material (e.g., Si or the like), and a set of the two narrowband transmission filter sections $2_1$ and $2_2$ formed at positions respectively corresponding to positions of the pyroelectric elements $4_1$ and $4_2$ on a first surface (an upper surface in FIG. 4) of the filter forming substrate 1 and configured to transmit infrared radiation of a first selective wavelength defined as a specific wavelength of infrared radiation generated by resonance radiation of $CO_2$ gas resulting from a flame and infrared radiation of a second selective wavelength defined as a reference wavelength different from the specific wavelength, respectively. In addition, the infrared optical filter 20 includes the broadband blocking filter section 3 formed on a second surface (a lower surface in FIG. 4) of the filter forming substrate 1, and configured to absorb infrared radiation of a wavelength longer than an upper limit of an infrared reflection band defined by the narrowband filter sections $2_1$ and $2_2$.

In the above-described infrared optical filter 20, the set of the two narrowband transmission filter sections $2_1$ and $2_2$ are arranged side by side on the first surface of the filter forming substrate 1. The narrowband transmission filter sections $2_1$ and $2_2$ include first $\lambda/4$ multilayer films 21, second $\lambda/4$ multilayer films 22, and wavelength selection layers $23_1$ and $23_2$, respectively. The first $\lambda/4$ multilayer film 21 is formed by stacking plural types (two types in this embodiment) of thin films 21b and 21a having different refractive indexes and the same optical film thicknesses on each other. The second $\lambda/4$ multilayer film 22 is formed on the opposite surface of the first $\lambda/4$ multilayer film 21 from the filter forming substrate 1, and formed by stacking plural types of the thin films 21a and 21b described above. Each of the wavelength selection layers $23_1$ and $23_2$ is interposed between the first and second $\lambda/4$ multilayer films 21 and 22 and is designed to have an optical film thickness different from the optical thickness of the thin films 21a and 21b according to a corresponding selective wavelength. Note that the tolerance of the variation in the optical film thickness of the two types of the thin films 21a and 21b is about $\pm$ 1% and the tolerance of the variation in physical film thickness is determined according to the variation in the optical film thickness.

In addition, in the infrared optical filter 20, $Al_2O_3$ which is a far-infrared radiation absorbing material having a property of absorbing far-infrared radiation is adopted as a material (a low refractive index material) of the thin film 21b defining a low refractive index layer in each of the first and second $\lambda/4$ multilayer films 21 and 22, and Ge is adopted as a material (a high refractive index material) of the thin film 21a defining a high refractive index layer. Further, in the infrared optical filter 20, as materials of the wavelength selection layers $23_1$ and $23_2$, there are used the same materials as those of the thin films 21b and 21a that are the second films from the top of the first $\lambda/4$ multilayer film 21 immediately below the wavelength selection layers $23_1$ and $23_2$, and the thin films 21b and 21b of the second $\lambda/4$ multilayer film 22 that are farthest from the filter forming substrate 1 are formed of the above-described low refractive index material. The far-infrared radiation absorbing material is not limited to $Al_2O_3$, there may be adopted $SiO_2$ and $Ta_2O_5$ as oxides other than $Al_2O_3$ and, since the refractive index of $SiO_2$ is lower than that of $Al_2O_3$, a difference in refractive index between the high refractive index material and the low refractive index material can be made larger by $SiO_2$ than the difference by $Al_2O_3$.

Incidentally, the first selective wavelength defined as the specific wavelength of infrared radiation generated by the resonance radiation of $CO_2$ gas in the flame in a fire is 4.3 $\mu$m (or 4.4 $\mu$m). As for the absorption wavelength of infrared radiation in various gases that can be generated in a house or the like, the absorption wavelength of $CH_4$ (methane) is 3.3 $\mu$m, that of CO (carbon monoxide) is 4.7 $\mu$m, and that of NO (nitrogen monoxide) is 5.3 $\mu$m. Consequently, in the infrared optical filter 20 of the present embodiment, the second selective wavelength defined as the reference wavelength is 3.9 $\mu$m that is a value relatively close to the first selective wavelength. In order to selectively detect the infrared radiations of the first selective wavelength and the second selective wavelength, the narrowband transmission filter sections $2_1$ and $2_2$ need to have a reflection band in an infrared region of about 3.1 $\mu$m to 5.5 $\mu$m, and a reflection bandwidth $\Delta\lambda$ of 2.4 $\mu$m or more is essential. Note that, if it is assumed that a designed center wavelength corresponding to four times of the optical film thickness common to the thin films 21a and 21b is $\pm$ 0, as shown in FIG. 5, the reflection band is symmetrical with respect to $1/\lambda_0$ in a view of a transmission spectrum having a wave number that is a reciprocal of the wavelength of incident light as the horizontal axis and a transmittance as the vertical axis.

In the present embodiment, the designed center wavelength $\lambda_0$ of each of the first $\lambda/4$ multilayer film 21 and the second λ/4 multilayer film 22 is set to 4.0 μm such that it becomes possible to detect the infrared radiation of the above-described first selective wavelength by appropriately setting the optical film thickness of each of the wavelength selection layers $23_1$ and $23_2$. In addition, if it is assumed that the refractive index of the high refractive index material as the material of the thin film 21a is nH and the refractive index of the low refractive index material as the material of the thin film 21b is nL, the physical film thicknesses of the thin films 21a and 21b are set to $\lambda_0/4n_H$ and $\lambda_0/4n_L$. Specifically, in a case where the high refractive index material is Ge and the low refractive index material is $Al_2O_3$, nH and $n_L$ are set to satisfy nH = 4.0 and $n_L$ = 1.7, the physical film thickness of the thin film 21a formed of the high refractive index material is set to 250 nm, and the physical film thickness of the thin film 21b formed of the low refractive index material is set to 588 nm.

FIG. 6 shows the result of simulation of the transmission spectrum when it is assumed that the number of stacked layers of a λ/4 multilayer film (a refractive index periodic structure) in which the thin film 21b made of the low refractive index material and the thin film 21a made of the high refractive index material are alternately stacked on each other on the first surface of the filter forming substrate 1 constituted by the Si substrate is 21 and there is no absorption performed in each of the thin films 21a and 21b (i.e., the extinction coefficient of each of the thin films 21a and 21b is 0), and the designed center wavelength $\lambda_0$ is 4 λm.

In FIG. 6, the horizontal axis indicates the wavelength of incident light (infrared radiation) and the vertical axis indicates the transmittance. "A" in the drawing shows the transmission spectrum in a case where the high refractive index material is Ge (nH = 4.0) and the low refractive index material is $Al_2O_3$ (nL = 1.7). "B" in the drawing shows the transmission spectrum in a case where the high refractive index material is Ge (nH = 4.0) and the low refractive index material is $SiO_2$ (nL = 1.5). "C" in the drawing shows the transmission spectrum in a case where the high refractive index material is Ge (nH = 4.0) and the low refractive index material is ZnS (nL = 2.3).

In addition, FIG. 7 shows the result of simulation of the reflection bandwidth Δλ of the λ/4 multilayer film (the refractive index periodic structure) in a case where the high refractive index material is Ge and the refractive index of the low refractive index material is changed. Note that "A", "B", and "C" in FIG. 7 correspond to the respective points of "A", "B", and "C" in FIG. 6.

From FIGS. 6 and 7, it can be seen that the reflection bandwidth Δλ increases as the difference in refractive index between the high refractive index material and the low refractive index material increases, and it can also be seen that, in a case where the high refractive index material is Ge, by adopting $Al_2O_3$ or $SiO_2$ as the low refractive index material, it is possible to secure the reflection band of the infrared region of at least 3.1 μm to 5.5 μm, and also achieve the reflection bandwidth Δλ of 2.4 μm or more.

Next, FIGS. 9 and 10 show the result of simulation of the transmission spectrum in a case where, as shown in FIG. 8, the number of stacked layers of the first λ/4 multilayer film 21 is set to 4 and the number of stacked layers of the second λ/4 multilayer film 22 is set to 6, the high refractive index material of the thin film 21a is Ge, the low refractive index material of the thin film 21b is $Al_2O_3$, the material of the wavelength selection layer 23 interposed between the first λ/4 multilayer film 21 and the second λ/4 multilayer film 22 is $Al_2O_3$ as the low refractive index material, and the optical film thickness of the wavelength selection layer 23 is variously changed in a range of 0 nm to 1600 nm. Herein, an arrow A1 in FIG. 8 indicates incident light, an arrow A2 indicates transmitted light, and an arrow A3 indicates reflected light. If it is assumed that the refractive index of the material of the wavelength selection layer 23 is "n" and the physical film thickness of the wavelength selection layer 23 is "d", the optical film thickness of the wavelength selection layer 23 is determined by the product of the refractive index "n" and the physical film thickness "d", i.e., given by "nd". Note that, in this simulation as well, it is assumed that there is no absorption performed in each of the thin films 21a and 21b (i.e., the extinction coefficient of each of the thin films 21a and 21b is 0), the designed center wavelength $\lambda_0$ is 4 μm, and the physical film thickness of the thin film 21a is 250 nm, and the physical film thickness of the thin film 21b is 588 nm.

From FIGS. 9 and 10, it can be seen that the reflection band is formed in the infrared region of 3 μm to 6 μm by the first λ/4 multilayer film 21 and the second λ/4 multilayer film 22, and it can also be seen that a narrow transmission band is localized in the reflection band of 3 μm to 6 μm by appropriately setting the optical film thickness "nd" of the wavelength selection layer 23. Specifically, by changing the optical film thickness "nd" of the wavelength selection layer 23 in a range of 0 nm to 1600 nm, it can be seen that it is possible to continuously change the transmission peak wavelength in a range of 3.1 μm to 5.5 μm. More specifically, by changing the optical film thickness "nd" of the wavelength selection layer 23 to 1390 nm, 0 nm, 95 nm, 235 nm, and 495 nm, the transmission peak wavelength becomes 3.3 μm, 4.0 μm, 4.3 μm, 4.7 μm, and 5.3 μm, respectively.

Consequently, by appropriately changing only the design of the optical film thickness of the wavelength selection layer 23 without changing the design of each of the first λ/4 multilayer film 21 and the second λ/4 multilayer film 22, it becomes possible to perform the sensing of not only a flame corresponding to the specific wavelength of 4.3 μm but also various gases such as $CH_4$ corresponding to the specific wavelength of 3.3 μm, CO corresponding to the specific wavelength of 4.7 μm, and NO corresponding to the specific wavelength of 5.3 μm. Note that the range of the optical film thickness "nd" of 0 nm to 1600 nm corresponds to the range of the physical film thickness "d" of 0 nm to 941 nm. In addition, the reason why the transmission peak wavelength becomes 4000 nm in a case where the optical film thickness "nd" of the wavelength selection layer 23 is 0 nm, i.e., the wavelength selection layer 23 does not exist in FIG. 9 is that the designed center wavelength $\lambda_0$ of each of the first $\lambda/4$ multilayer film 21 and the second $\lambda/4$ multilayer film 22 is set to 4 $\mu$m (4000 nm), and, by appropriately changing the designed center wavelength $\lambda_0$ of each of the first and second $\lambda/4$ multilayer films 21 and 22, it is possible to change the transmission peak wavelength in the case where the wavelength selection layer 23 does not exist.

Although, as the low refractive index material of the thin film 21b, there is adopted $Al_2O_3$ as the far-infrared radiation absorbing material with a property of absorbing infrared radiation in a range of a wavelength longer than an upper limit of the infrared reflection band defined by the first and second $\lambda/4$ multilayer films 21 and 22 (i.e., the infrared reflection band set by the narrowband transmission filter sections $2_1$ and $2_2$), five types of $MgF_2$, $Al_2O_3$, $SiO_x$, $Ta_2O_5$, and $SiN_x$ were examined as the far-infrared radiation absorbing material. Specifically, FIG. 11 shows the result of measurement of transmission spectra of an $MgF_2$ film, an $Al_2O_3$ film, an $SiO_x$ film, a $Ta_2O_5$ film, and an $SiN_x$ film with the film thickness of each film being set to 1 $\mu$m, and film deposition conditions when each film is deposited on an Si substrate being set as shown in Table 1 shown below. As a film deposition apparatus for the $MgF_2$ film, the $Al_2O_3$ film, the $SiO_x$ film, the $Ta_2O_5$ film, and the $SiN_x$ film, an ion beam assisted deposition apparatus was used.

[TABLE 1]

| | | $MgF_2$ | $Al_2O_3$ | $SiO_x$ | $Ta_2O_5$ | $Si_3N_4$ |
|---|---|---|---|---|---|---|
| refractive index | | 1.38 | 1.68 | 1.70 | 2.10 | 2.30 |
| deposition conditions | common conditions | substrate: Si substrate, thickness: 1 μm, evaporation rate: 5 Å/sec<br>substrate temperature: 250°C | | | | |
| | IB conditions | No IB | Oxygen IB | No IB | Oxygen IB | Ar IB |

The "IB conditions" in Table 1 denote conditions of ion beam assist when the film deposition is performed by the ion beam assisted deposition apparatus, the "No IB" denotes that no ion beam irradiation is performed. The "Oxygen IB" denotes that oxygen ion beam irradiation is performed. The "Ar IB" denotes that argon ion beam irradiation is performed. In addition, in FIG. 11, the horizontal axis indicates the wavelength and the vertical axis indicates the transmittance. Further, in the drawing, "A1" indicates the transmission spectrum of the $Al_2O_3$ film, "A2" indicates that of the $Ta_2O_5$ film, "A3" indicates that of the $SiO_x$ film, "A4" indicates that of the $SiN_x$ film, and "A5" indicates that of the $MgF_2$ film.

Furthermore, Table 2 shown below shows the result of examination of "Optical Characteristic: Absorption", "Refractive Index", and "Easiness in Film Deposition" of each of the $MgF_2$ film, the $Al_2O_3$ film, the $SiO_x$ film, the $Ta_2O_5$ film, and the $SiN_x$ film as evaluation items.

[TABLE 2]

| | $MgF_2$ | $Al_2O_3$ | $SiO_x$ | $Ta_2O_5$ | $Si_3N_4$ |
|---|---|---|---|---|---|
| Optical Characteristic: Absorption | Poor | Good | Average | Good | Average |
| Refractive Index | Very good | Good | Good | Average | Average |
| Easiness in Film Deposition | Average | Very good | Average | Good | Average |

As for the evaluation item of the "Optical Characteristic: Absorption", the evaluation was made on the basis of the absorptivity of the far-infrared radiation of 6$\mu$ m or more calculated from the transmission spectrum of FIG. 11. In Table 2, to the evaluation items, each of "Very good", "Good", "Average", and "Poor" is assigned in descending order from a high-evaluation rank to a low-evaluation rank. As for the evaluation item of the "Optical Characteristic: Absorption", the evaluation rank is higher as the absorptivity of the far-infrared radiation is higher, and the evaluation rank is lower as the absorptivity of the far-infrared radiation is lower. In addition, as for the evaluation item of the "Refractive Index", from the viewpoint of increasing the refractive index difference with respect to the high refractive index material, the evaluation rank is higher as the refractive index is lower, and the evaluation rank is lower as the refractive index is higher. Further, as for the evaluation item of the "Easiness of Film Deposition", the evaluation rank is higher as the easiness in obtaining a dense film by a vapor deposition method or a sputtering method is higher, and the evaluation rank is lower as the easiness in obtaining the dense film is lower. However, each evaluation item shows the evaluation result in which $SiO_x$ is evaluated as $SiO_2$, and $SiN_x$ is evaluated as $Si_3N_4$.

From Table 2, as for the five types of $MgF_2$, $Al_2O_3$, $SiO_x$, $Ta_2O_5$, and $SiN_x$, there was no significant difference in the evaluation item of the "Easiness in Film Deposition" among them and, as a result of focusing attention on the "Optical Characteristic: Absorption" and the "Refractive Index", a conclusion was reached that it was preferable to adopt any of $Al_2O_3$, $SiO_x$, $Ta_2O_5$, and $SiN_x$ as the far-infrared radiation absorbing material. In a case where $Al_2O_3$ or $T_2O_5$ is adopted as the far-infrared radiation absorbing material, it is possible to improve the absorptivity of the far-infrared radiation as compared with a case where the far-infrared radiation absorbing material is $SiO_x$ or $SiN_x$. However, from the viewpoint of increasing the refractive index difference with respect to the high refractive index material, $Al_2O_3$ is more preferable than $T_2O_5$. In addition, in a case where $SiN_x$ is adopted as the far-infrared radiation absorbing material, it is possible to enhance the moisture resistance of the thin film 21b formed of the far-infrared radiation absorbing material. Further, when SiOx is adopted as the far-infrared radiation absorbing material, it is possible to increase the refractive index difference with respect to the high refractive index material, and achieve a reduction in the number of stacked layers (layer number) of each of the first and second λ/4 multilayer films 21 and 22.

An explanation is given hereinbelow of a method of producing the narrowband transmission filter sections $2_1$ and $2_2$ in the infrared optical filter 20 with reference to FIGS. 12A to 12E.

First, a first λ/4 multilayer film formation step of forming the first λ/4 multilayer film 21 by alternately stacking the thin film 21b that is made of $Al_2O_3$ as the low refractive index material and has a predetermined physical film thickness (588 nm in this embodiment) and the thin film 21a that is made of Ge as the high refractive index material and has a predetermined physical film thickness (250 nm in this embodiment) on the entire first surface of the filter forming substrate 1 constituted of the Si substrate is performed. Subsequently, by performing a wavelength selection layer deposition step of depositing, on the entire surface on the one surface side (the surface of the first λ/4 multilayer film 21 in this embodiment) of the filter forming substrate 1, the wavelength selection layer $23_1$ that is made of the same material ($Al_2O_3$ in this embodiment) as that of the thin film 21b positioned at the second position from the top of the first λ/4 multilayer film 21 and has an optical film thickness set according to the selective wavelength of one narrowband transmission filter section $2_1$, the structure shown in FIG. 12A is obtained. Note that, although it is possible to successively deposit the two types of the thin films 21b and 21a when, e.g., the vapor deposition method or the sputtering method is adopted as the method of depositing the thin films 21b and 21a and the wavelength selection layer $23_1$, in the case where the low refractive index material is $Al_2O_3$ as described above, it is preferable to adopt the ion beam assisted deposition method to enhance the denseness of the thin film 21b by the irradiation of the oxygen ion beam during the deposition of the thin film 21b. In addition, as the low refractive index material, there may also be adopted $SiO_x$, $T_2O_5$, and $SiN_x$ as the far-infrared radiation absorbing materials other than $Al_2O_3$. In any case, in the deposition of the thin film 21b made of the far-infrared radiation absorbing material, it is preferable to perform the film deposition by the ion beam assisted deposition method, and it is possible to precisely control the chemical composition of the thin film 21b made of the low refractive index material, and also enhance the denseness of the thin film 21b.

After the above-described wavelength selection layer deposition step, by performing a resist layer formation step of forming a resist layer 31 that covers only the portion corresponding to the narrowband transmission filter section $2_1$ by using a photolithography technique, the structure shown in FIG. 12B is obtained.

Thereafter, by performing a wavelength selection layer patterning step of selectively etching an unnecessary portion of the wavelength selection layer $23_1$ by using the resist layer 31 as a mask and the thin film 21a as the uppermost film of the first λ/4 multilayer film 21 as an etching stopper layer, the structure shown in FIG. 12C is obtained. In the wavelength selection layer patterning step, as described above, when the low refractive index material is an oxide ($Al_2O_3$) and the high refractive index material is a semiconductor material (Ge), by adopting wet etching that uses a hydrofluoric acid-based solution as an etching liquid, it becomes possible to perform etching with high etching selectivity as compared with a case where dry etching is adopted. This is because the oxide such as $Al_2O_3$ or $SiO_2$ is easily solved in the hydrofluoric acid-based solution, while Ge is extremely resistant to dissolution in the hydrofluoric acid-based solution. As an example, when wet etching is performed by using, as the hydrofluoric acid-base solution, diluted hydrofluoric acid (e.g., diluted hydrofluoric acid having a concentration of hydrofluoric acid of 2%) made of a mixed solution of hydrofluoric acid (HF) and pure water ($H_2O$), the etching rate of $A1_2O_3$ is about 300 nm/min, the etching rate ratio between $Al_2O_3$ and Ge is about 500:1, and it is possible to perform etching with high etching selectivity.

After the above-described wavelength selection layer patterning step, by performing a resist layer removal step of removing the resist layer 31, the structure shown in FIG. 12D is obtained.

After the above-described resist layer removal step, by performing a second λ/4 multilayer film formation step of forming the second λ/4 multilayer film 22 by alternately stacking the thin film 21a that is made of Ge as the high refractive index material and has a predetermined physical film thickness (250 nm) and the thin film 21b that is made of $Al_2O_3$ as the low refractive index material and has a predetermined physical film thickness (588 nm) on the entire first surface of the filter forming substrate 1, the structure shown in FIG. 12E is obtained. At this point, by performing the second λ/4 multilayer film formation step, in the region corresponding to the narrowband transmission filter section $2_2$,

the thin film 21a as the lowermost layer of the second λ/4 multilayer film 22 is stacked directly on the thin film 21a as the uppermost layer of the first λ/4 multilayer film 21, and the wavelength selection layer $23_2$ of the narrowband transmission filter section $2_2$ is constituted by the thin film 21a as the uppermost layer and the thin film 21a as the lowermost layer. However, the transmission spectrum of the narrowband transmission filter section $2_2$ corresponds to that in a case where the optical film thickness "nd" is 0 nm in the simulation result of FIG. 10. Note that, although it is possible to successively deposit the two types of the thin films 21a and 21b when, e.g., the vapor deposition method or the sputtering method is adopted as the method of depositing the thin films 21a and 21b, in the case where the low refractive index material is $Al_2O_3$ as described above, it is preferable to adopt the ion beam assisted deposition method to enhance the denseness of the thin film 21b by the irradiation of the oxygen ion beam during the deposition of the thin film 21b.

That is, in the production of the narrowband transmission filter sections $2_1$ and $2_2$ of the infrared optical filter 20, in the middle of the basic step of stacking a plurality of types (two types in this case) of the thin films 21b and 21a having different refractive indexes and the same optical film thicknesses on the first surface of the filter forming substrate 1, a wavelength selection layer formation step including the wavelength selection layer deposition step of depositing a wavelength selection layer $23_i$ (i = 1 in this embodiment) that is made of the same material as that of the second layer from the top of the multilayer film (the first λ/4 multilayer film 21 in this embodiment) in the middle of the basic step and has an optical film thickness set according to the selective wavelength of an arbitrary narrowband transmission filter section $2_i$ (i = 1 in this case) out of a plurality of the narrowband transmission filter sections $2_1$, ..., 2m (m = 2 in this embodiment) on the above-described multilayer film, and the wavelength selection layer patterning step of etching an unnecessary portion of the wavelength selection layer $23_i$ deposited in the wavelength selection layer deposition step other than a portion corresponding to the arbitrary narrowband transmission filter section $2_i$ by using the uppermost layer of the multilayer film as the etching stopper layer is performed once, and a plurality of the narrowband transmission filter sections $2_i$ and $2_2$ are formed. If the wavelength selection layer formation step is performed plural times in the middle of the basic step described above, it is possible to produce the infrared optical filter 20 having more selective wavelengths with one chip.

In addition, in the above-described production method, in the middle of the basic step of stacking the plurality of types of the thin films 21a and 21b on the first surface of the filter forming substrate 1, by depositing the thin film that is made of the same material as that of the second layer from the top of the multilayer film (the first λ/4 multilayer film 21 in this embodiment) in the middle of the basic step and has an optical film thickness set according to the selective wavelength of the arbitrary filter section $2_i$ (i = 1 in this case) out of the filter sections $2_1$, ..., 2m (m = 2 in this embodiment) on the above-described multilayer film, and etching the portion of the thin film deposited on the multilayer film other than the portion corresponding to the arbitrary filter section $2_i$ (i = 1 in this case), the pattern of at least one wavelength selection layer $23_1$ is formed. However, the present embodiment is not limited thereto. It is only necessary to form the pattern of at least one wavelength selection layer $23_1$ in the middle of the basic step and, e.g., in a case where the wavelength selection layer $23_2$ is made of the same material as that of the wavelength selection layer $23_1$ and the optical film thickness thereof is set to be smaller than that of the wavelength selection layer $23_1$, the patterns of the two wavelength selection layers $23_1$ and $23_2$ may also be formed by etching the thin film on the multilayer film halfway.

Further, the present invention is not limited to the above-described production method, and the wavelength selection layers $23_1$, ..., $23_m$ (m = 2 in this embodiment) having mutually different optical film thicknesses may also be formed at positions corresponding to positions of the filter sections $2_1$, ..., $2_m$ (m = 2 in this embodiment) by mask vapor deposition between the first λ/4 multilayer film formation step of forming the first λ/4 multilayer film 21 on the first surface of the filter forming substrate 1 and the second λ/4 multilayer film formation step of forming the second λ/4 multilayer film 22 on the opposite side of the first λ/4 multilayer film from the filter forming substrate 1.

Furthermore, in the above-described production method, of the two types of the thin films 21a and 21b described above, in a case where the far-infrared radiation absorbing material of the thin film 21b is $SiO_x$ or $SiN_x$ and the material of the thin film 21a is Si, it is preferable that the ion beam assisted deposition apparatus having Si as an evaporation source is used, a vacuum atmosphere is used when the thin film 21a made of Si is deposited, the oxygen ion beam is irradiated when the thin film 21b made of $SiO_x$ as an oxide is deposited, and a nitrogen ion beam is irradiated when the thin film 21b made of $SiN_x$ as a nitride is deposited. With this, in the above-described production method, it is possible to achieve commonality of the evaporation source between the two types of the thin films 21a and 21b, and hence it is not necessary to prepare an ion beam assisted deposition apparatus having a plurality of evaporation sources, and it is possible to achieve a reduction in production cost. Similarly, in the above-described production method, of the two types of the thin films 21a and 21b described above, in the case where the far-infrared radiation absorbing material of the thin film 21b is $SiO_x$ or $SiN_x$ and the material of the thin film 21a is Si, it is preferable that a sputtering apparatus having Si as a target is used, the vacuum atmosphere is used when the thin film 21a made of Si is deposited, an oxygen atmosphere is used when the thin film 21b made of $SiO_X$ is deposited, and a nitrogen atmosphere is used when the thin film 21b made of $SiN_x$ is deposited. With this, in the above-described production method, it is possible to achieve commonality of the target between the two types of the thin films 21a and 21b, and hence it is not necessary to prepare a sputtering apparatus having a plurality of targets, and it is possible to achieve a reduction in production cost.

In the above-described narrowband transmission filter sections $2_1$ and $2_2$ of the infrared optical filter 20, by appropriately setting the optical film thickness "nd" of each of the wavelength selection layers $23_1$ and $23_2$, as shown in FIG. 13, it is possible to realize the infrared optical filter 20 having the transmission peak wavelengths (center wavelengths) at approximately 3.9 μm and approximately 4.3 μm with one chip. Each of the transmission spectrum having the transmission peak wavelength of approximately 3.9 μm and the transmission spectrum having the transmission peak wavelength of approximately 4.3 μm has a full width at half maximum (FWHM) of about 100 nm and, by appropriately designing the narrowband transmission filter sections $2_1$ and $2_2$, it is possible to increase the full width at half maximum or the transmittance.

Note that each of the first λ/4 multilayer film 21 and the second λ/4 multilayer film 22 may appropriately have the refractive index periodic structure, and may be formed by stacking three or more types of thin films on one another.

Next, an explanation is given of the broadband blocking filter section 3 of the infrared optical filter 20.

The broadband blocking filter section 3 is constituted by a multilayer film formed by stacking multiple types (two types in this embodiment) of thin films 3a and 3b having different refractive indexes on each other. In the broadband blocking filter section 3, $Al_2O_3$ as one type of the far-infrared radiation absorbing material having a property of absorbing far-infrared radiation is adopted as a material of the thin film 3a as a low refractive index layer having a relatively low refractive index. Ge is adopted as a material of the thin film 3b as a high refractive index layer having a relatively high refractive index. The thin film 3a and the thin film 3b are alternately stacked on each other. The number of stacked layers is 11 though the number of stacked layers is not particularly limited. However, in the broadband blocking filter section 3, it is preferable to constitute the uppermost layer that is farthest from the filter forming substrate 1 by the thin film 3a as the low refractive index layer in terms of the stability of optical characteristics. The far-infrared radiation absorbing material is not limited to $Al_2O_3$, and there may also be adopted $SiO_2$ and $Ta_2O_5$ as oxides other than $Al_2O_3$ as the far-infrared radiation absorbing material. The refractive index of $SiO_2$ is lower than that of $Al_2O_3$ so that the difference in refractive index between the high refractive index material and the low refractive index material can be made larger by using $SiO_2$. In addition, as the far-infrared radiation absorbing material, $SiN_x$ as a nitride may also be adopted.

As described above, in the broadband blocking filter section 3, of the two types of the thin films 3a and 3b, although the thin film 3a is formed of $Al_2O_3$ as the far-infrared radiation absorbing material that absorbs the far-infrared radiation, it is only necessary to form at least one of the plurality of the types by using the far-infrared radiation absorbing material. For example, the broadband blocking filter section 3 may be a multilayer film in which a Ge film, an $Al_2O_3$ film, and an $SiO_x$ film as three types of thin films are stacked in the order of Ge film-$Al_2O_3$ film-Ge film-$SiO_x$ film-Ge film-$Al_2O_3$ film-Ge film ... from the side closer to a semiconductor substrate 1 constituted by an Si substrate and, in this case, two types of the thin films out of the three types of the thin films are formed of the far-infrared radiation absorbing material.

The above-described broadband blocking filter section 3 absorbs far-infrared radiation in a range of a wavelength longer than an upper limit of the infrared reflection band set by the narrowband transmission filter sections $2_1$ and $2_2$. In the broadband blocking filter section 3, although $Al_2O_3$ is adopted as the far-infrared radiation absorbing material having a property of absorbing the infrared radiation, similarly to the above-described narrowband transmission filter sections $2_1$ and $2_2$, as the far-infrared radiation absorbing material, five types of $MgF_2$, $Al_2O_3$, $SiO_x$, $Ta_2O_5$, and $SiN_x$ were examined.

In order to verify the effect of the ion beam assist, the present inventors prepared samples obtained by variously changing the amount of ion beam irradiation in the deposition of the $Al_2O_3$ film on the Si substrate, and analyzed the difference in film quality among the $Al_2O_3$ films of the individual samples by FT-IR (Fourier-transform infrared spectroscopy). FIG. 14 shows the result of analysis by FT-IR in which the horizontal axis indicates the wave number and the vertical axis indicates the absorptivity. In the drawing, "A1" shows the result of analysis of the sample obtained when no ion beam assist is performed, and "A2", "A3", "A4", "A5", and "A6" show the results of analysis of the samples obtained by changing the amount of the ion beam irradiation from a smaller amount to a larger amount. From FIG. 14, it can be seen that, by the irradiation of the ion beam, the absorptivity in the vicinity of 3400 $cm^{-1}$ resulting from moisture can be reduced and, as the amount of the ion beam irradiation is increased, the absorptivity in the vicinity of 3400 $cm^{-1}$ resulting from moisture is lowered. That is, it is presumed that the film quality of the $Al_2O_3$ film can be improved by the ion beam assist, and the denseness can be thereby enhanced.

In addition, as described above, in the case where $Al_2O_3$ or $T_2O_5$ is adopted as the far-infrared radiation absorbing material, it is possible to improve absorption of the far-infrared radiation as compared with the case where the far-infrared radiation absorbing material is $SiO_x$ or $SiN_x$.

Further, when the present inventors measured a transmission spectrum of a reference example in which the $Al_2O_3$ film of 1 μm was deposited on the Si substrate, the present inventors obtained measured values as shown in "A1" of FIG. 15A, and obtained information that the measured values "A1" were different from calculated values shown in "A2" of FIG. 15A, and calculated optical parameters (a refractive index, an absorption coefficient) of the thin film 3a formed of $Al_2O_3$ from the measured values "A1" of FIG. 15A by Cauchy formula. The calculated optical parameters are shown in FIG. 15B. In the new optical parameters shown in FIG. 15B, the refractive index and the absorption coefficient are not constant in a wavelength range of 800 nm to 20000 nm, the refractive index is gradually lowered as the wavelength becomes longer, and the absorption coefficient is gradually increased as the wavelength becomes longer in a wavelength range of 7500 nm to 15000 nm.

"A1" of FIG. 16 shows the result of simulation of a transmission spectrum of a portion where the narrowband transmission filter section $2_1$ having the multilayer structure of Table 3 shown below and a transmission peak wavelength of 4.4 μm and the broadband blocking filter section 3 having the multilayer structure of Table 4 shown below are formed so as to be stacked on each other in the thickness direction of the filter forming substrate 1 as the infrared optical filter 20 by using the above-described new optical parameters of the $Al_2O_3$ film. In addition, "A2" of FIG. 16 shows the result of simulation of a comparative example in which, without using the above-described new optical parameters of the $Al_2O_3$ film, the refractive index of the $Al_2O_3$ film is constant and the absorptivity is constantly set to 0. Note that the simulation was performed with the refractive index of Ge constantly set to 4.0 and the absorption coefficient constantly set to 0.0 in each of the embodiment and the comparative example.

[TABLE 3]

| constituent | material of film | thickness (nm) |
|---|---|---|
| thin film 21b | $Al_2O_3$ | 600 |
| thin film 21a | Ge | 230 |
| thin film 21b | $Al_2O_3$ | 600 |
| thin film 21a | Ge | 230 |
| thin film 21b | $Al_2O_3$ | 600 |
| wavelength selection layer $23_1$ | Ge | 460 |
| thin film 21b | $Al_2O_3$ | 600 |
| thin film 21a | Ge | 230 |
| thin film 21b | $Al_2O_3$ | 600 |
| thin film 21a | Ge | 230 |
| thin film 21b | $Al_2O_3$ | 600 |
| filter formation substrate 1 | Si substrate | - |

[TABLE 4]

| constituent | material of film | thickness (nm) |
|---|---|---|
| thin film 3a | $Al_2O_3$ | 749 |
| thin film 3b | Ge | 73 |
| thin film 3a | $Al_2O_3$ | 563 |
| thin film 3b | Ge | 37 |
| thin film 3a | $Al_2O_3$ | 463 |
| thin film 3b | Ge | 149 |
| thin film 3a | $Al_2O_3$ | 254 |
| thin film 3b | Ge | 91 |
| thin film 3a | $Al_2O_3$ | 433 |
| thin film 3b | Ge | 517 |
| thin film 3a | $Al_2O_3$ | 182 |
| thin film 3b | Ge | 494 |
| thin film 3a | $Al_2O_3$ | 185 |

(continued)

| constituent | material of film | thickness (nm) |
|---|---|---|
| thin film 3b | Ge | 498 |
| thin film 3a | $Al_2O_3$ | 611 |
| thin film 3b | Ge | 465 |
| thin film 3a | $Al_2O_3$ | 626 |
| thin film 3b | Ge | 467 |
| thin film 3a | $Al_2O_3$ | 749 |
| thin film 3b | Ge | 513 |
| thin film 3a | $Al_2O_3$ | 1319 |
| thin film 3b | Ge | 4 3 1 |
| thin film 3a | $Al_2O_3$ | 1 3 1 9 |
| thin film 3b | Ge | 8 6 |
| thin film 3a | $Al_2O_3$ | 1 4 0 |
| thin film 3b | Ge | 2 7 |
| thin film 3a | $Al_2O_3$ | 3 9 |
| thin film 3b | Ge | 4 |
| thin film 3a | $Al_2O_3$ | 1 5 |
| filter formation substrate 1 | Si substrate | - |

In FIG. 16 described above, the horizontal axis indicates the wavelength of incident light (infrared radiation), while the vertical axis indicates the transmittance. From FIG. 16, it can be seen that while the far-infrared radiation of 9000 nm to 20000 nm is not blocked in the transmission spectrum "A2" of the comparative example in which the new optical parameters of the $Al_2O_3$ film are not used, the far-infrared radiation of 9000 nm to 20000 nm is blocked in the transmission spectrum "A1" of the embodiment in which the new optical parameters of the $Al_2O_3$ film are used, and the broadband blocking filter section 3 having the number of stacked layers of 29 and the narrowband transmission filter section 21 having the number of stacked layers of 11 can block broadband infrared radiation having the wavelength of 800 nm to 20000 nm, and the narrow transmission band can be localized only in the vicinity of 4.3 $\mu$m. Note that the transmission spectrum of the broadband blocking filter section 3 becomes, e.g., as shown in FIG. 17 and, in the example of FIG. 17, near infrared radiation of 4 $\mu$m or less and far-infrared radiation of 5.6 $\mu$m or more are blocked.

In the production of the infrared optical filter 20 of the present embodiment, first, a broadband blocking filter section formation step of forming the broadband blocking filter section 3 by alternately stacking the thin film 3a made of, e.g., the $Al_2O_3$ film and the thin film 3b made of, e.g., the Ge film on the second surface of the filter forming substrate 1 constituted by the Si substrate is performed. Thereafter, the narrowband transmission filter sections $2_1$ and $2_2$ may appropriately be formed on the first surface of the filter forming substrate 1 in the manner described above.

Next, an explanation is given of an infrared flame detection apparatus that uses the infrared flame detector of the present embodiment with reference to FIG. 18.

The infrared flame detection apparatus shown in FIG. 18 includes the infrared radiation receiving element 40, the infrared optical filter 20, an amplification section (an amplification circuit) 63a, and a signal processing section 100 constituted by a microcomputer and the like. The infrared radiation receiving element 40 includes the set of the two pyroelectric elements $4_1$ and $4_2$ having mutually different polarities. The two pyroelectric elements $4_1$ and $4_2$ are arranged side by side and are connected in anti-series on the pyroelectric element forming substrate 41. The infrared optical filter 20 includes the broadband blocking filter section 3 and the two narrowband transmission filter sections $2_1$ and $2_2$ having mutually different transmission wavelength ranges. The infrared optical filter 20 is disposed forwardly of the infrared radiation receiving element 40. The amplification section 63a is configured to amplify the output of the infrared radiation receiving element 40 (the differential output of the set of the two pyroelectric elements $4_1$ and $4_2$). The signal processing section 100 is configured to determine the presence or absence of a flame of a fire on the basis of the output signal of the amplification section 63a. When determining that the flame of the fire is present, the signal processing section 100 may output a fire detection signal to an external reporting apparatus, or may cause a display apparatus such as an LED or a display or a sound apparatus such as a speaker or a buzzer to report the occurrence of the fire. Note that, although the amplification section 63a is provided in the above-described IC 63, the signal processing section 100 may also be provided in the IC 63 in addition to the amplification section 63a. That is, the signal processing section 100 may be provided in the infrared flame detector of the present embodiment.

As a comparative example of the infrared flame detection apparatus having the structure shown in FIG. 18, an infrared flame detection apparatus having the structure shown in FIG. 19 is feasible.

The infrared flame detection apparatus having the structure shown in FIG. 19 includes infrared radiation receiving elements $40_1$ and $40_2$ each constituted by one pyroelectric element, infrared optical filter $320_1$ and $320_2$ that are formed by using a sapphire substrate and disposed forwardly of the infrared radiation receiving elements $40_1$ and $40_2$, two amplification sections (amplification circuits) $163_1$ and $163_2$ that individually amplify output signals of the infrared radiation receiving elements $40_1$ and $40_2$, a subtracter 164 that determines the difference between output signals of the two amplification sections $163_1$ and $163_2$, and a signal processing section 100' constituted by a microcomputer and the like that determines the presence or absence of a flame of a fire on the basis of an output signal of the subtracter 164. Note that, in the infrared flame detection apparatus having the structure shown in FIG. 19, infrared sensors $340_1$ and $340_2$ are constituted by the infrared radiation receiving elements $40_1$ and $40_2$, can packages $170_1$ and $170_2$ in which the infrared radiation receiving elements $40_1$ and $40_2$ are accommodated, and the infrared optical filters $320_1$ and $320_2$. However, in the infrared flame detection apparatus, the output signals of the infrared radiation receiving elements $40_1$ and $40_2$ are weak and susceptible to the influence of electromagnetic noises, and hence the infrared flame detection apparatus is constituted by shielding the two infrared sensors $340_1$ and $340_2$, the two amplification sections $163_1$ and $163_2$, and the subtracter 164 by a shield member 180 so that the size of the infrared flame detector is significantly increased as compared with the sizes of the can packages $170_1$ and $170_2$ and the size of the infrared flame detection apparatus is also increased.

In contrast to this, since the infrared flame detection apparatus having the structure shown in FIG. 18 uses the above-described infrared flame detector, it is possible to achieve a significant reduction in the size of the infrared flame detector as compared with the infrared flame detection apparatus having the structure shown in FIG. 19, and therefore it is possible to achieve a significant reduction in the size of the infrared flame detection apparatus.

In addition, since the infrared flame detection apparatus having the structure shown in FIG. 18 includes the above-described infrared optical filter 20, the infrared flame detection apparatus has an advantage of being able to remove the influence of infrared radiation generated by thermal radiation. When an object is black body, the relationship between the temperature and radiant energy of the object is as shown in FIG. 20, and a radiant energy distribution of the infrared radiation emitted from the object is dependent on the temperature of the object. According to Wien's displacement law, if it is assumed that the wavelength of infrared radiation that provides the maximum value of the radiant energy distribution is $\lambda$ [$\mu$m] and the absolute temperature of the object is T [K], the wavelength $\lambda$ is represented by $\lambda = 2898/T$. The spectrum emitted from a heat source is extremely broad as compared with the spectrum emitted from a light emitting diode. As a result, in the infrared flame detection apparatus of the comparative example shown in FIG. 19, noises or the saturation of the amplification sections $163_1$ and $163_2$ are caused, which leads to a reduction in sensitivity. However, in the infrared flame detection apparatus having the structure shown in FIG. 18, it is possible to prevent the saturation of the amplification section 63a to achieve an improvement in sensitivity.

When a fire occurs, the resonance radiation of $CO_2$ gas is caused by the heat of a flame, and infrared radiation having a peak wavelength of 4.3 $\mu$m is emitted. The emission spectrum of the infrared radiation generated by the resonance radiation of $CO_2$ gas is a narrowband emission spectrum having a peak wavelength of 4.3 $\mu$m.

On the other hand, in ambient light such as sunlight, a heat source, arc, and illumination, the emission of a spectrum having a specific wavelength is rare in general, and the ambient light usually provides a broadband broad emission spectrum. Consequently, in the present embodiment, as described above, the first selective wavelength is set to 4.3 $\mu$m as the peak wavelength of the resonance radiation of $CO_2$ gas, and the second selective wavelength is set to 3.9 $\mu$m in the vicinity of 4.3 $\mu$m. The second selective wavelength is preferably set to a wavelength with which the infrared intensity of the second selective wavelength of the ambient light is as close to the infrared intensity of 4.3 $\mu$m of the ambient light as possible.

In the infrared flame detection apparatus having the structure shown in FIG. 19, if it is assumed that the selective wavelengths of the infrared optical filters $320_1$ and $320_2$ are 4.3 $\mu$m and 3.9 $\mu$m, of the output signals of the infrared radiation receiving elements $40_1$ and $40_2$, the signal components of the infrared radiations of 4.3 $\mu$m and 3.9 $\mu$m resulting from the flame are Is1 and Is2, the DC bias components of the infrared radiations of 4.3 $\mu$m and 3.9 $\mu$m resulting only from the ambient light are Idl and Id2, the amplification factors of the amplification sections $163_1$ and $163_2$ are G1 and G2, and the output signals of the amplification sections $163_1$ and $163_2$ are I1 and I2,

$$I1 = (Is1 + Id1) \times G1$$

$$I2 = (Is2 + Id2) \times G2$$

are satisfied. Accordingly, the output signal of the subtracter 164 is given by $I1 - I2 = (Is1 + Id1) \times G1 - (Is2 + Id2) \times G2$. However, in a case where the values of the DC bias components Idl and Id2 resulting from the ambient light are extremely large, the saturation of each of the amplification sections $163_1$ and $163_2$ is caused so that the S/N ratio is lowered.

In contrast to this, in the infrared radiation receiving element 40 in the infrared flame detection apparatus having the structure shown in FIG. 18, since the pyroelectric elements $4_1$ and $4_2$ are connected in the manner shown in FIG. 3B on the pyroelectric element forming substrate $4_1$ such that the differential output of the two pyroelectric elements $4_1$ and $4_2$ is obtained, if it is assumed that the output signals of the pyroelectric elements $4_1$ and $4_2$ are the same as those of the infrared radiation receiving elements $40_1$ and $40_2$ and the output of the infrared radiation receiving element 40 is "I",

$$I = (Is1 + Id1) - (Is2 + Id2)$$

is satisfied. Since the emission spectrum of the ambient light is broad in general, when the first and second selective wavelengths are selected so as to be included in the wavelength band in which the radiant intensities of the ambient light become substantially identical,

$$Id1 = Id2$$

can be considered to hold so that

$$I = Is1 - Is2$$

is satisfied, it is possible to cancel the influence of the DC bias component by the ambient light such as sunlight or the like (i.e., in a case where a fire does not occur and the infrared radiation resulting from the resonance radiation of $CO_2$ gas is not generated, the output of the infrared radiation receiving element 40 becomes substantially zero), it is possible to increase the gain of the amplification section 63a configured to amplify the output of the infrared radiation receiving element 40, and an improvement in S/N ratio is allowed.

In addition, in the infrared flame detector of the present embodiment, as described above, the infrared optical filter 20 includes the filter forming substrate 1, the set of the two narrowband transmission filter sections $2_1$ and $2_2$, and the broadband blocking filter section 3. The filter forming substrate 1 is made of the infrared radiation transmitting material. The set of the two narrowband transmission filter sections $2_1$ and $2_2$ are formed at positions corresponding to positions of the pyroelectric elements $4_1$ and $4_2$ on the first surface of the filter forming substrate 1. The set of the two narrowband transmission filter sections $2_1$ and $2_2$ are configured to transmit the infrared radiation of the first selective wavelength as the specific wavelength (4.3 $\mu$m) generated by the resonance radiation of $CO_2$ gas resulting from a flame and the infrared radiation of the second selective wavelength as the reference wavelength (e.g., 3.9 $\mu$m) different from the specific wavelength, respectively. The broadband blocking filter section 3 is formed on the second surface of the filter forming substrate 1. The broadband blocking filter 3 is configured to absorb the infrared radiation of the wavelength longer than the upper limit of the infrared reflection band defined by the narrowband transmission filter sections $2_1$ and $2_2$. In the infrared flame detector, the narrowband transmission filter sections $2_1$ and $2_2$ include the first $\lambda$/4 multilayer films 21 and 21, the second $\lambda$/4 multilayer films 22 and 22, and the wavelength selection layers $23_1$ and $23_2$, respectively. The first $\lambda$/4 multilayer film 21 is formed by means of stacking plural types of the thin films 21a and 21b having different refractive indexes and the same optical film thickness on each other. The second $\lambda$/4 multilayer film 22 is disposed on the opposite side of the first $\lambda$/4 multilayer film 21 from the filter forming substrate 1. The second $\lambda$/4 multilayer is formed by means of stacking plural types of the thin films 21a and 21b on each other. Each of the wavelength selection layers $23_1$ and $23_2$ is interposed between the first $\lambda$/4 multilayer film 21 and the second $\lambda$/4 multilayer film 22 and has optical film thickness which is different from the common optical thickness of the thin films 21a and 21b and is selected on the basis of the corresponding selective wavelength. Thus, in the infrared flame detector of the present embodiment, it is possible to achieve a reduction in cost by reducing the size of the infrared radiation receiving filter 20 having a plurality of the narrowband transmission filter sections $2_1$ and $2_2$, and reduce the distance between the centers of the plurality of the narrowband transmission filter sections $2_1$ and $2_2$ to reduce the difference in optical path length between the infrared radiation of the specific wavelength and the infrared radiation of the reference wavelength, and achieve an improvement in the light receiving efficiency of each of the pyroelectric elements $4_1$ and $4_2$ of the infrared radiation receiving element 40.

Further, in the infrared flame detector of the present embodiment, the broadband blocking filter section 3 of the infrared optical filter 20 is constituted by the multilayer film formed by means of stacking multiple types of the thin films 3a and 3b having different refractive indexes on each other. At least one type of the thin film 3a out of the multiple types of the thin films 3a and 3b is formed of the far-infrared radiation absorbing material having a property of absorbing the far-infrared radiation. Thus, according to the infrared flame detector of the present embodiment, it is possible to realize the infrared radiation blocking function in a broad band from near infrared radiation to far infrared radiation without using the sapphire substrate by making use of a light interference effect by the multilayer film constituting the broadband blocking filter section 3 and a far-infrared radiation absorption effect by the thin film 3a constituting the multilayer film while reducing the number of layers in the multilayer film, and thereby achieve a reduction in cost.

Furthermore, in the infrared flame detector of the present embodiment, the narrowband transmission filter sections $2_1$ and $2_2$ of the infrared optical filter 20 have the infrared radiation blocking function in the broad band from near infrared radiation to far-infrared radiation caused by the light interference effect by the first and second $\lambda/4$ multilayer films $2_1$ and $2_2$ and the far-infrared radiation absorption effect by the thin film 21b in the multilayer film constituted by the first $\lambda/4$ multilayer film 21, the wavelength selection layers $23_1$ and $23_2$, and the second $\lambda/4$ multilayer film 22. Therefore, it is possible to realize the low-cost infrared optical filter 20 having the infrared radiation blocking function in the broad band from near infrared radiation to far-infrared radiation, and capable of selectively transmitting infrared radiation of a desired selective wavelength.

Moreover, in the above-described infrared optical filter 20, since the oxide or nitride is adopted as the far-infrared radiation absorbing material, it is possible to prevent the oxidation of the thin films 3a and 21b made of the far-infrared radiation absorbing material and the resultant change of optical characteristics thereof. Additionally, in the above-described infrared optical filter 20, since the uppermost layer of each of the broadband blocking filter section 3 and the narrowband transmission filter sections $2_1$ and $2_2$ that is farthest from the filter forming substrate 1 is formed of the above-mentioned oxide or nitride, it is possible to prevent the change of the physical properties of the thin film 3a or 21b as the uppermost layer resulting from the reaction with moisture or oxygen in air or absorption or adhesion of impurities to thereby enhance the performance of the filter, and also reduce reflection on the surface of each of the broadband blocking filter section 3 and the narrowband transmission filter sections $2_1$ and $2_2$ to thereby achieve an improvement in the performance of the filter.

In addition, in the above-described infrared optical filter 20, since the multilayer film of the broadband blocking filter section 3 is constituted by alternately stacking the thin film 3a formed of the far-infrared radiation absorbing material and the thin film 3b formed of Ge as the high refractive index material having a refractive index higher than that of the far-infrared radiation absorbing material on each other, it is possible to increase the difference in refractive index between the high refractive index material and the low refractive index material to be larger than that in the case where the high refractive index material is Si, PbTe, or ZnS, and reduce the number of stacked layers of the multilayer film. Further, in the case where Si is adopted as the high refractive index material, it is possible to increase the difference in refractive index between the high refractive index material and the low refractive index material in the multilayer film to be larger than that in a case where the high refractive index material is ZnS, and reduce the number of stacked layers (layer number) of the multilayer film. Furthermore, as for the narrowband transmission filter sections $2_1$ and $2_2$, it is possible to reduce the number of stacked layers because of the same reason.

In the present embodiment, although the Si substrate is used as the filter forming substrate 1 of the infrared optical filter 20, the filter forming substrate 1 is not limited to the Si substrate, and a Ge substrate may also be used. FIGS. 21 and 22 show data on transmission characteristics of Si and Ge disclosed on the Internet (retrieved on February 25, 2009, the Internet URL:

http://www.spectra.co.jp/kougaku.files/k_kessho.files/ktp.htm).

In the infrared flame detector of the present embodiment, as described above, by using the Si substrate or the Ge substrate as the filter forming substrate 1, it is possible to achieve a reduction in cost as compared with a case where the filter forming substrate 1 is a sapphire substrate, an MgO substrate, or a ZnS substrate.

Further, in the infrared flame detector of the present embodiment, the package 7 is made of metal, and the filter forming substrate 1 is bonded to and electrically connected to the cap 72 of the package 7 by using a bonding section 58 made of a conductive bonding material (e.g., a silver paste, a solder, or the like). With this, in the infrared flame detector of the present embodiment, it is possible to perform electromagnetic shielding with the filter forming substrate 1 and the package 7, prevent the influence of external radiant noises (electromagnetic noises) on the infrared radiation receiving element 40, and achieve an increase in sensitivity due to an improvement in S/N ratio.

Furthermore, in the infrared flame detector of the present embodiment, the window section 7a of the cap 72 is opened in the rectangular shape, a stepped section 20c that is positioned on the inner peripheral surface and the peripheral portion of the window section 7a in the cap 72 is formed in the infrared optical filter 20, and the stepped section 20c in the infrared optical filter 20 is fixed to the cap 72 via the bonding section 58 made of the above-described bonding material. Consequently, it is possible to enhance parallelism between the infrared optical filter 20 and the infrared radiation receiving element 40, enhance the precision in the distance between each of the narrowband transmission filter sections $2_1$ and $2_2$ and each of the pyroelectric elements $4_1$ and $4_2$ of the infrared radiation receiving element 40 in the optical axis direction of each of the narrowband transmission filter sections $2_1$ and $2_2$ of the infrared optical filter 20, and also enhance the precision in the alignment between the optical axis of each of the narrowband transmission filter sections $2_1$ and $2_2$ and the optical axis of each of the light receiving surfaces of the pyroelectric elements $4_1$ and $4_2$.

Moreover, in the infrared flame detector of the present embodiment, since the components of the amplification section (the amplification circuit) 63a configured to amplify the output of the infrared radiation receiving element 40 are accommodated in the package 7, it is possible to reduce an electric path between the infrared radiation receiving element 40 and the amplification section 63a and, since the amplification section 63a is also electromagnetically shielded, it is possible to achieve an increase in sensitivity by a further improvement in S/N ratio.

## Claims

**1.** An infrared flame detector comprising:

an infrared radiation receiving element accommodated in a package; and
an infrared optical filter disposed forwardly of said infrared radiation receiving element in said package, wherein
said infrared radiation receiving element includes a set of two pyroelectric elements having mutually different polarities, said two pyroelectric elements being arranged side by side on a pyroelectric element forming substrate and connected in anti-series or anti-parallel, and
wherein said infrared optical filter comprises:

a filter forming substrate made of an infrared radiation transmitting material;
a set of two narrowband transmission filter sections formed at positions respectively corresponding to positions of said pyroelectric elements on a first surface of said filter forming substrate, said two narrowband transmission filter sections being configured to transmit infrared radiation of a first selective wavelength defined as a specific wavelength of infrared radiation generated by resonance radiation of $CO_2$ gas resulting from a flame and infrared radiation of a second selective wavelength defined as a reference wavelength different from the specific wavelength, respectively; and
a broadband blocking filter section formed on a second surface of said filter forming substrate and configured to absorb infrared radiation of a wavelength longer than an upper limit of an infrared reflection band defined by said narrowband transmission filter sections, and
wherein each of said narrowband transmission filter sections comprises:

a first $\lambda/4$ multilayer film formed by stacking a plurality of types of thin films having different refractive indexes and the same optical film thicknesses on each other;
a second $\lambda/4$ multilayer film formed on an opposite side of said first $\lambda/4$ multilayer film from said filter forming substrate, said second $\lambda/4$ multilayer film formed by stacking the plurality of types of the thin films each other; and
a wavelength selection layer interposed between said first $\lambda/4$ multilayer film and said second $\lambda/4$ multilayer film, said wavelength selection layer being designed to have an optical film thickness different from the optical film thicknesses of the thin film according to the selective wavelength.

**2.** The infrared flame detector as set forth in claim 1, wherein
said broadband blocking filter section is constituted by a multilayer film formed by stacking multiple types of thin films having different refractive indexes on each other,
at least one of the multiple types of the thin films being formed of an infrared absorbing material having a property of absorbing far-infrared radiation.

**3.** The infrared flame detector as set forth in claim 1, wherein
said filter forming substrate is an Si substrate or a Ge substrate.

**4.** The infrared flame detector as set forth in claim 3, wherein
the package is made of metal, and the filter forming substrate is electrically connected to the package.

**5.** The infrared flame detector as set forth in claim 4, wherein a component of an amplification circuit configured to amplify an output of said infrared radiation receiving element is accommodated in said package.

FIG. 1 A

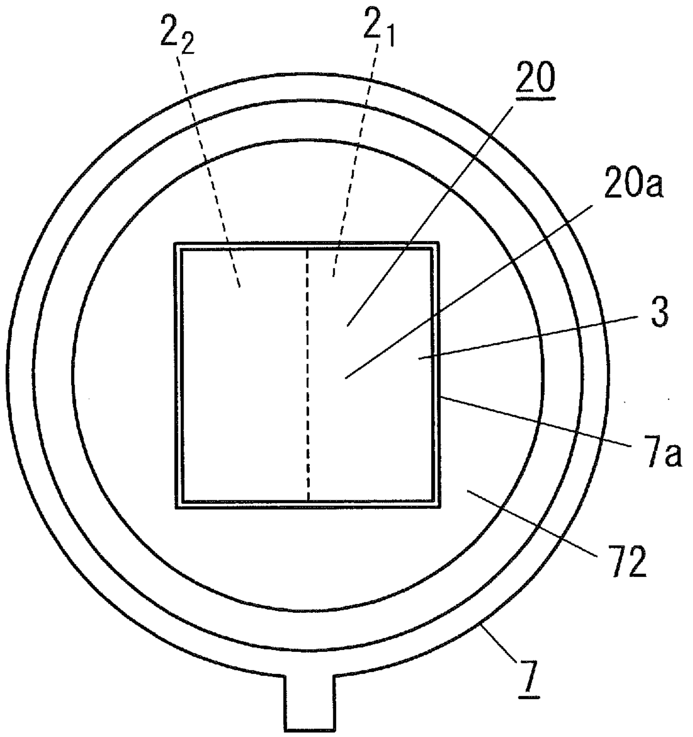
2₂
2₁
20
20a
3
7a
72
7

FIG. 1 B

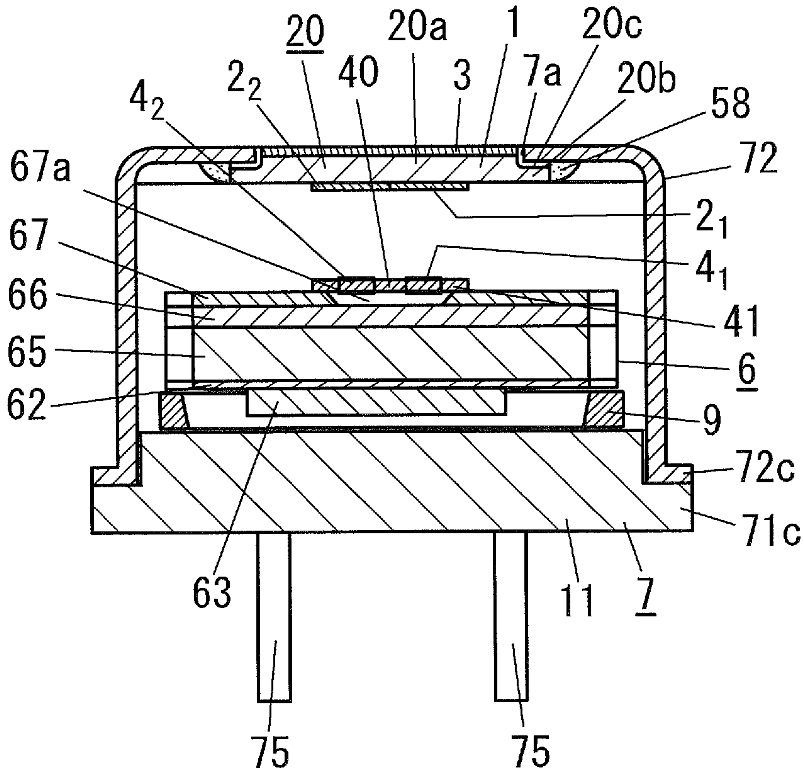
20
20a
1
20c
2₂
40
3
7a
20b
4₂
58
67a
72
2₁
67
4₁
66
41
65
6
62
9
72c
71c
63
11
7
75
75

FIG. 2

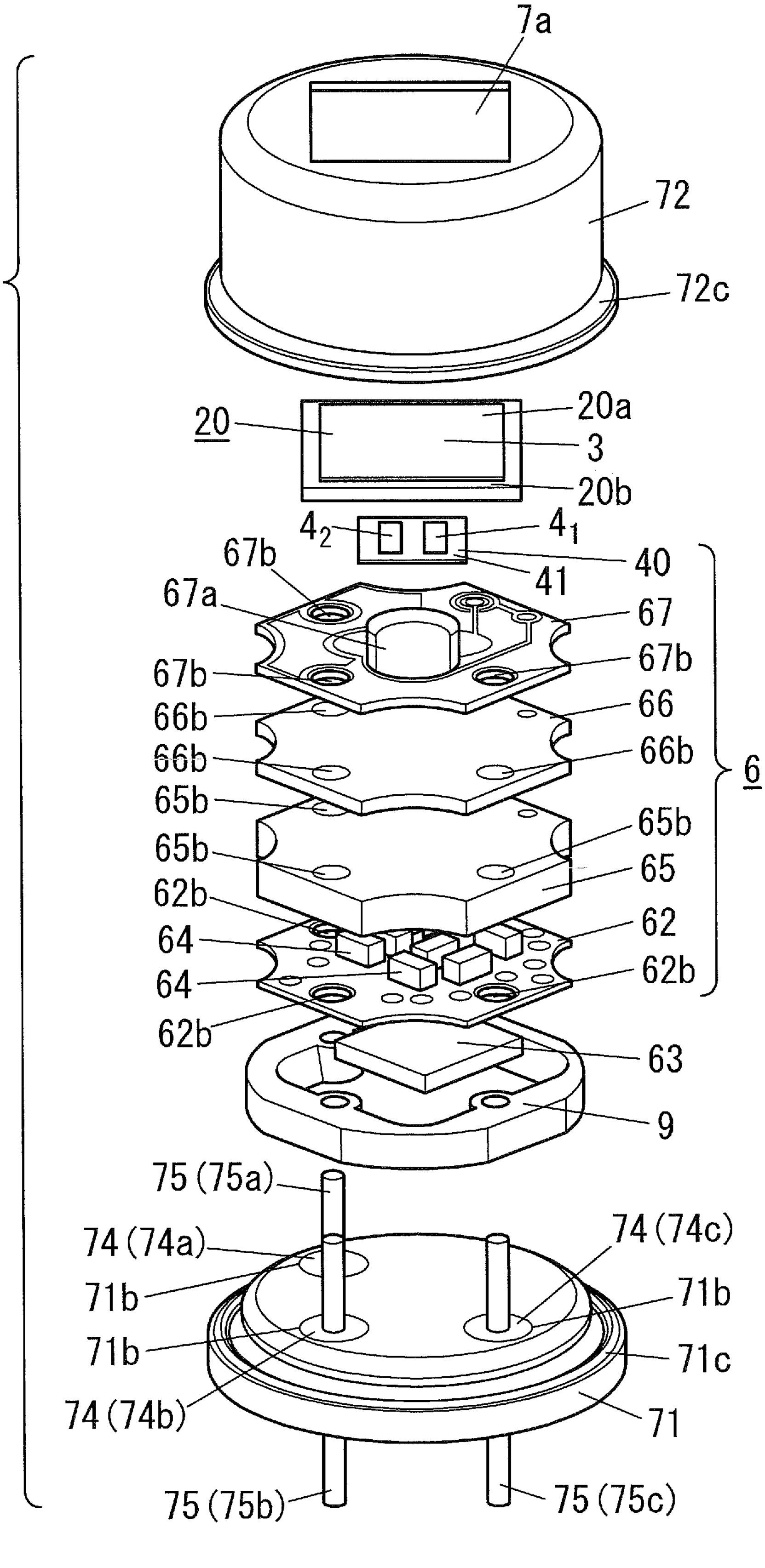
7a
72
72c
20
20a
3
20b
4₂
4₁
40
41
67b
67a
67
67b
67b
66b
66
66b
66b
6
65b
65b
65b
65
62b
64
62
64
62b
62b
63
9
75 (75a)
74 (74a)
74 (74c)
71b
71b
71b
71c
74 (74b)
71
75 (75b)
75 (75c)

FIG. 3 A

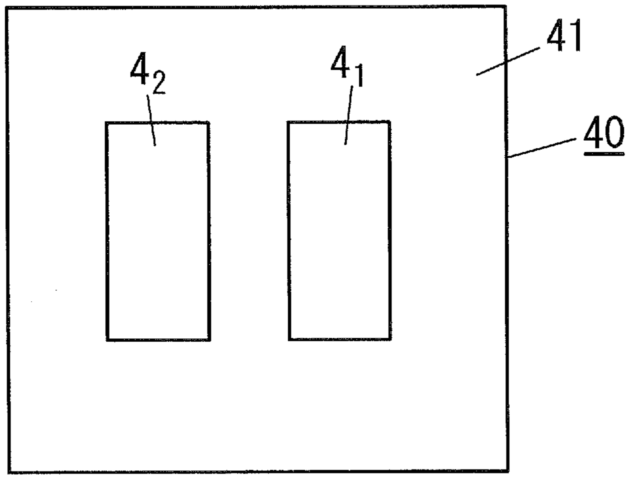


FIG. 3 B

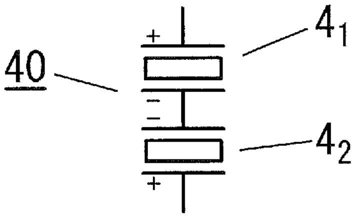


FIG. 3 C

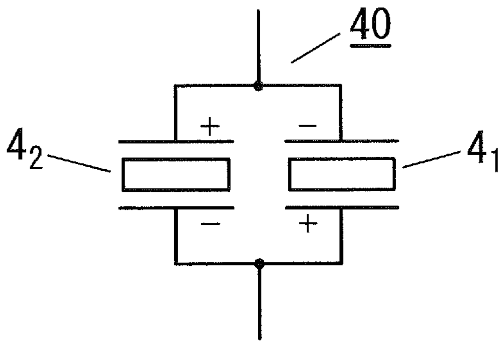

FIG. 4

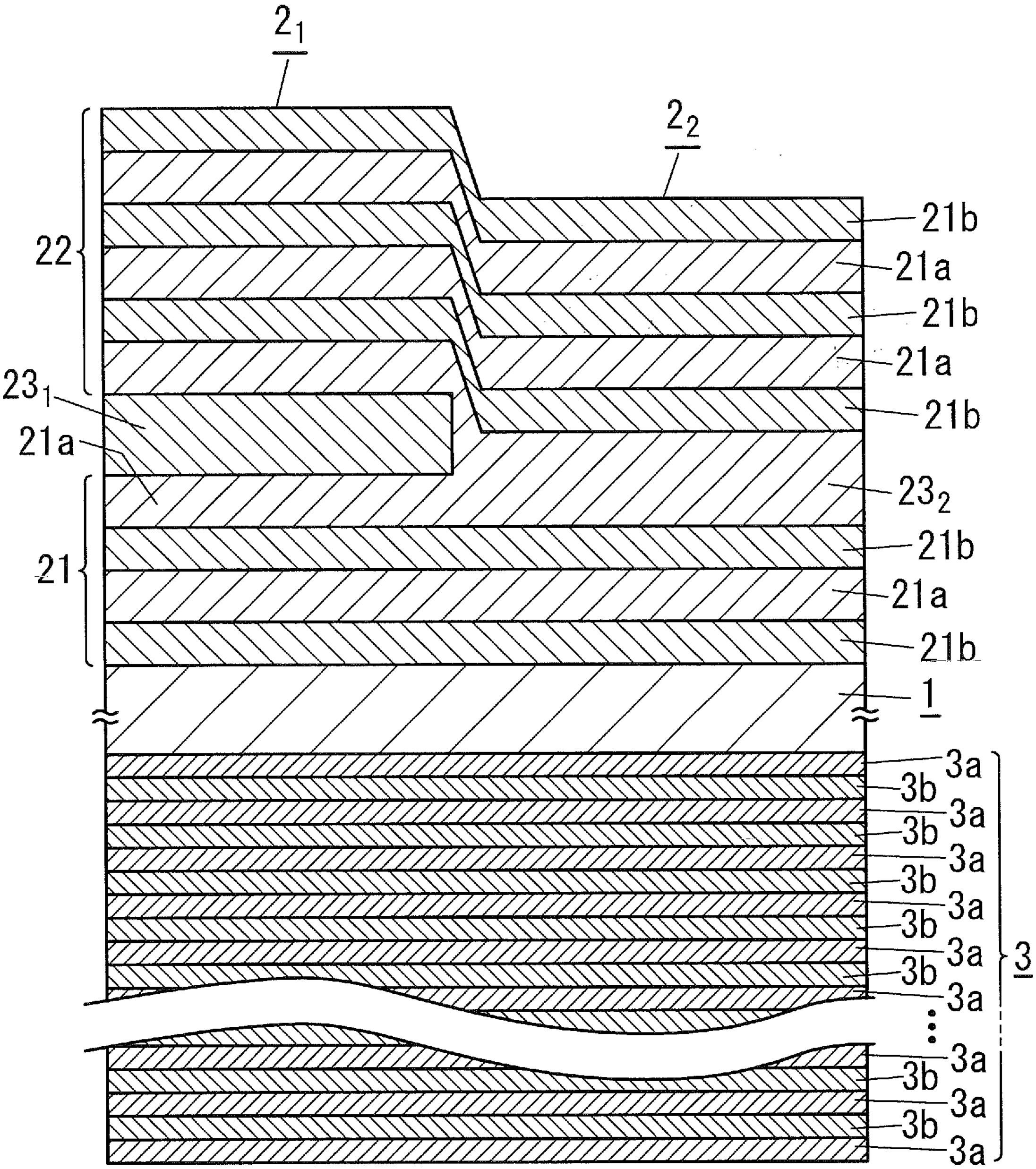

FIG. 5

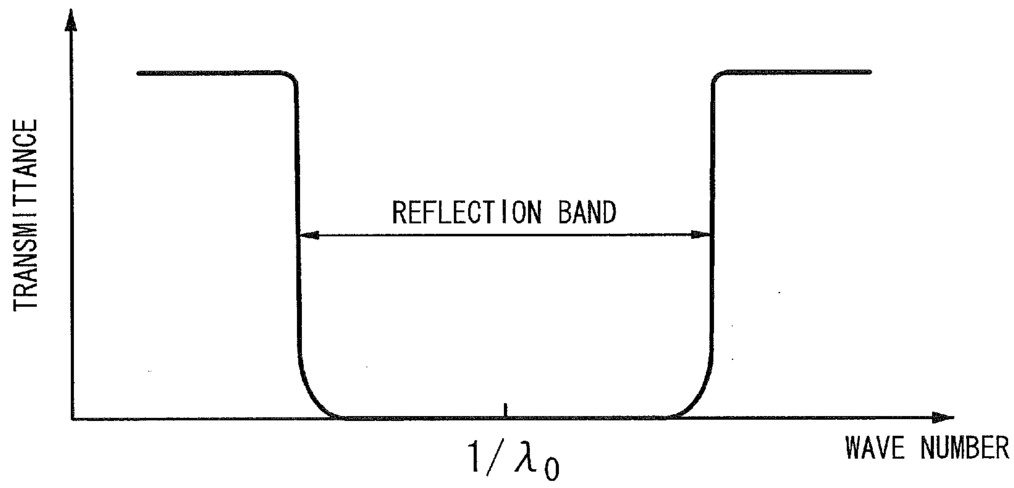
TRANSMITTANCE
REFLECTION BAND
1/λ0
WAVE NUMBER

FIG. 6

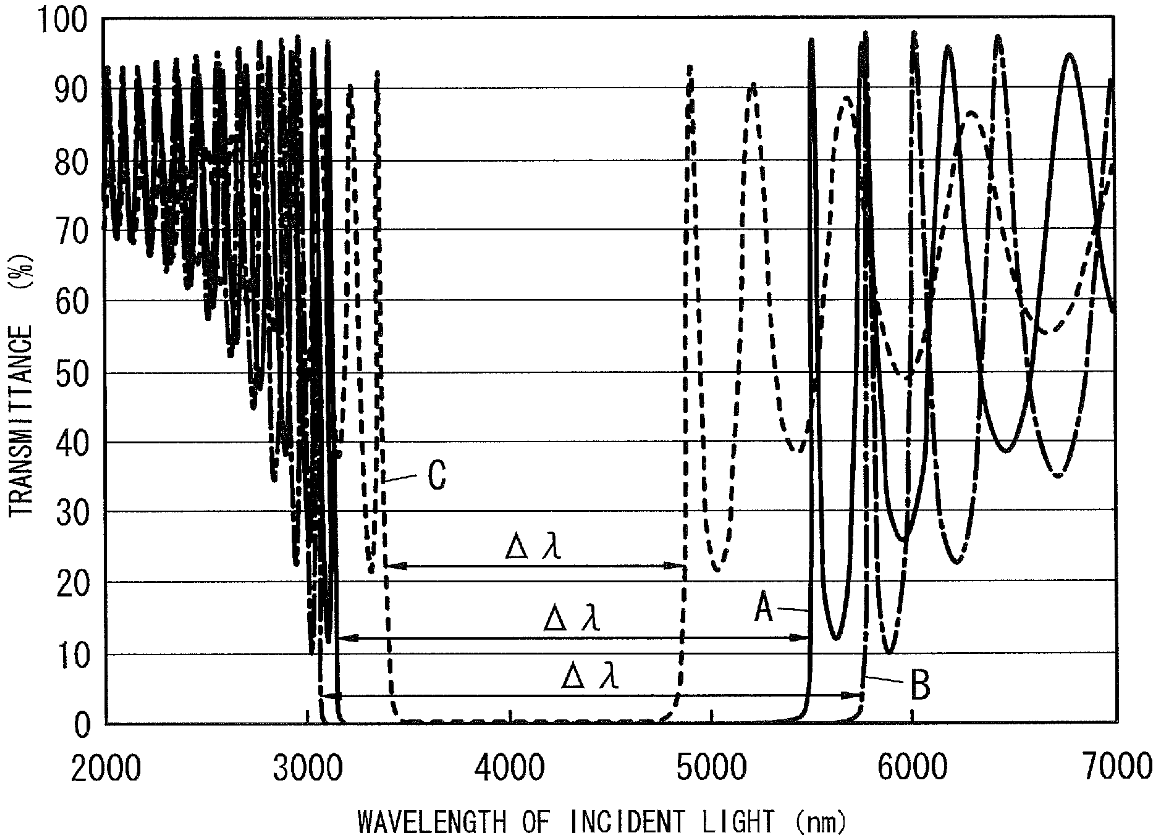
100
90
80
70
60
50
40
30
20
10
0
TRANSMITTANCE (%)
C
Δλ
Δλ
Δλ
A
B
2000
3000
4000
5000
6000
7000
WAVELENGTH OF INCIDENT LIGHT (nm)

FIG. 7

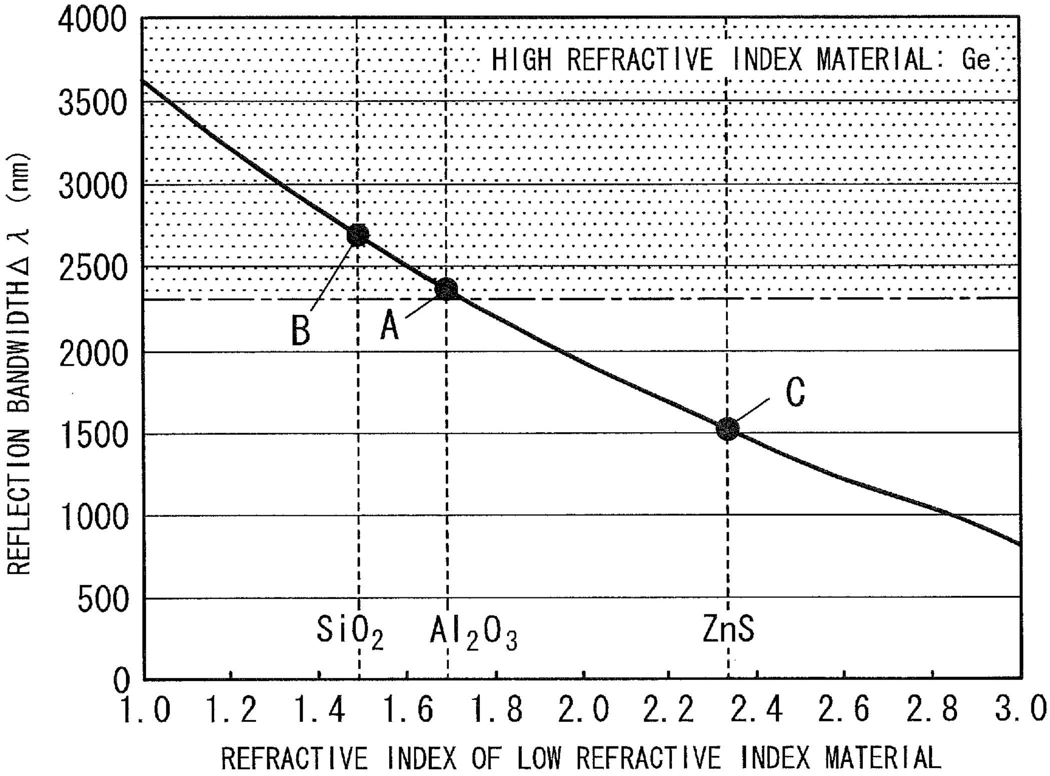
HIGH REFRACTIVE INDEX MATERIAL: Ge
REFLECTION BANDWIDTH Δλ (nm)
4000
3500
3000
2500
2000
1500
1000
500
0
B
A
C
SiO2
Al2O3
ZnS
1.0
1.2
1.4
1.6
1.8
2.0
2.2
2.4
2.6
2.8
3.0
REFRACTIVE INDEX OF LOW REFRACTIVE INDEX MATERIAL

FIG. 8

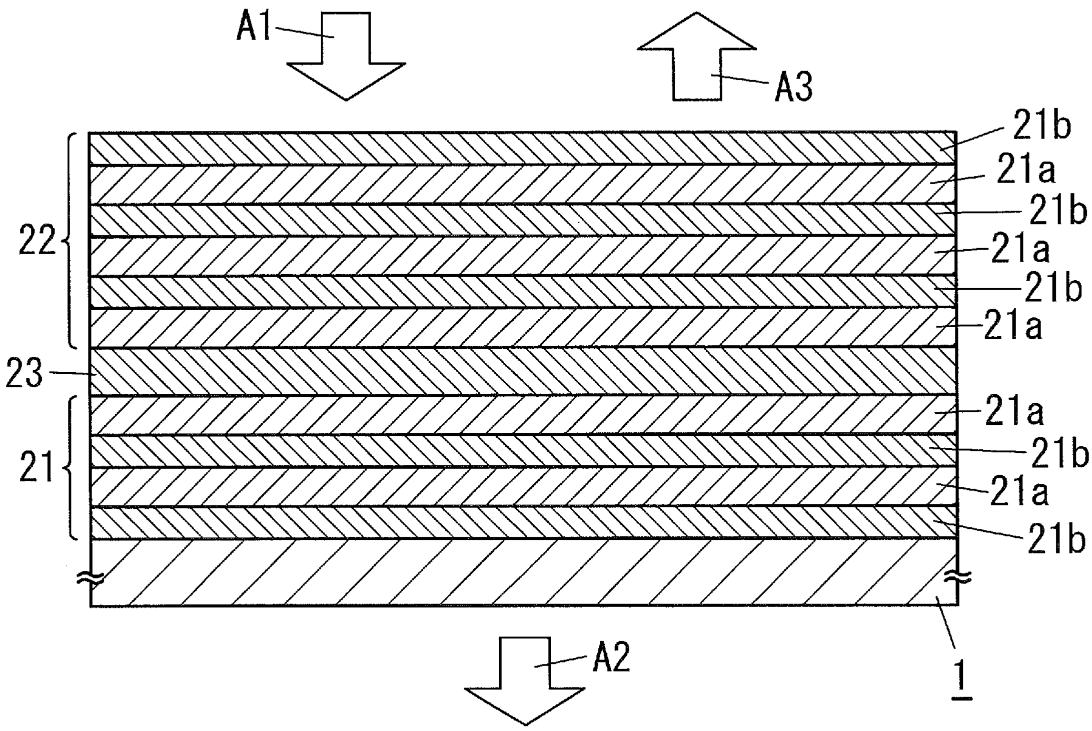
A1
A3
21b
21a
21b
21a
21b
21a
22
23
21
21a
21b
21a
21b
A2
1

FIG. 9

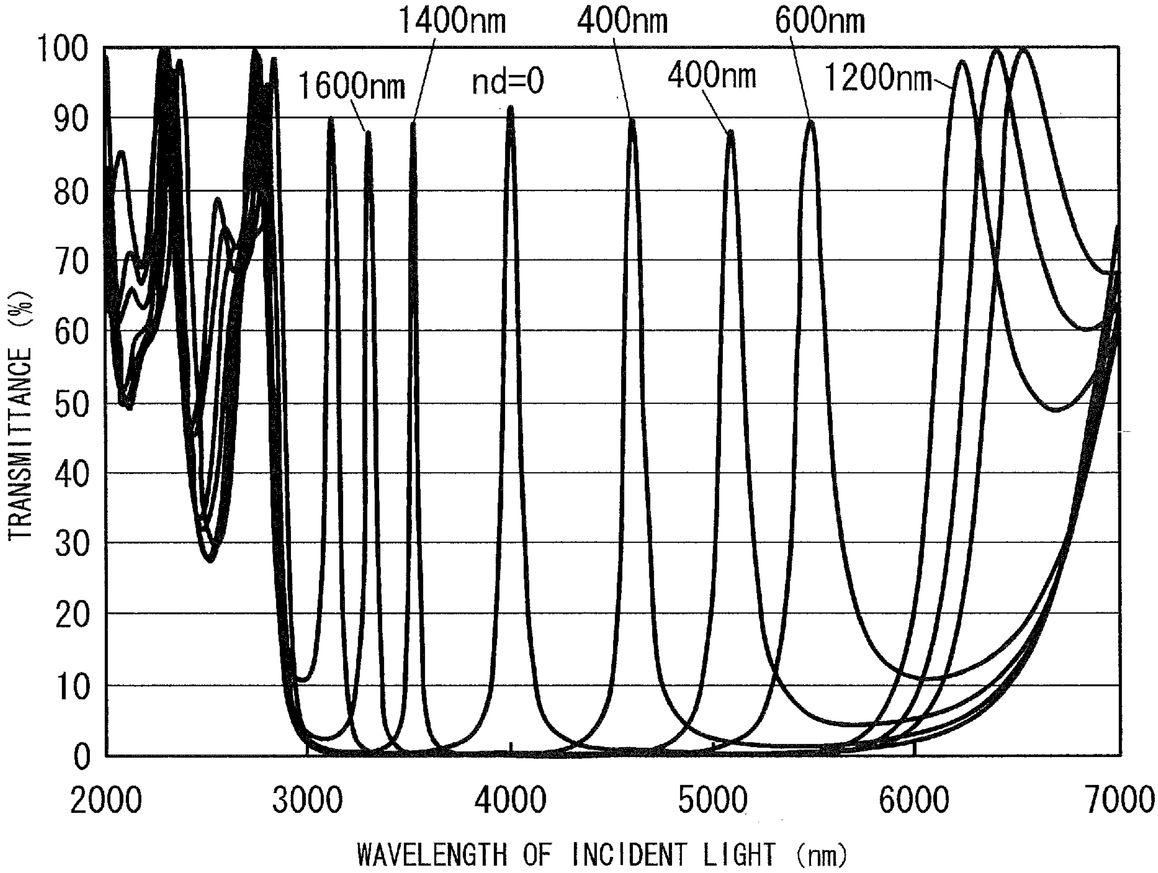
1400nm
400nm
600nm
1600nm
nd=0
400nm
1200nm
100
90
80
70
60
50
40
30
20
10
0
TRANSMITTANCE (%)
2000
3000
4000
5000
6000
7000
WAVELENGTH OF INCIDENT LIGHT (nm)

FIG. 10

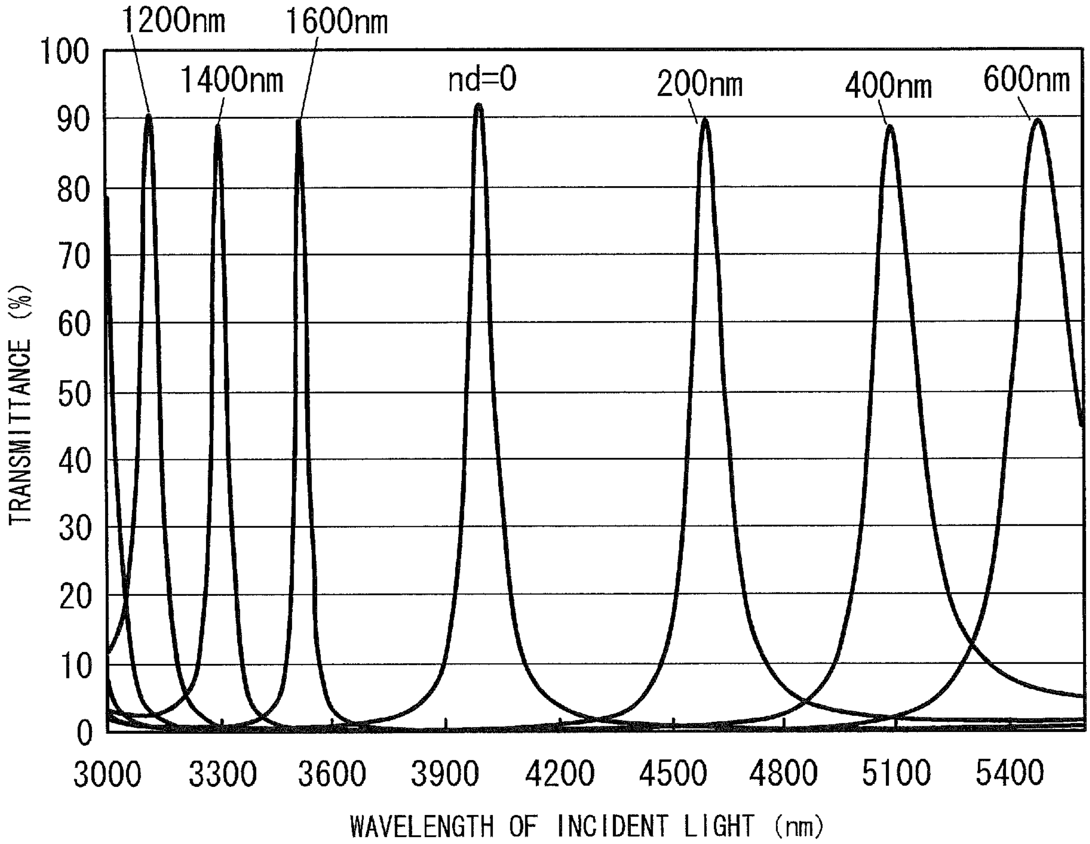
1200nm
1600nm
1400nm
nd=0
200nm
400nm
600nm
100
90
80
70
60
50
40
30
20
10
0
TRANSMITTANCE (%)
3000
3300
3600
3900
4200
4500
4800
5100
5400
WAVELENGTH OF INCIDENT LIGHT (nm)

FIG. 11

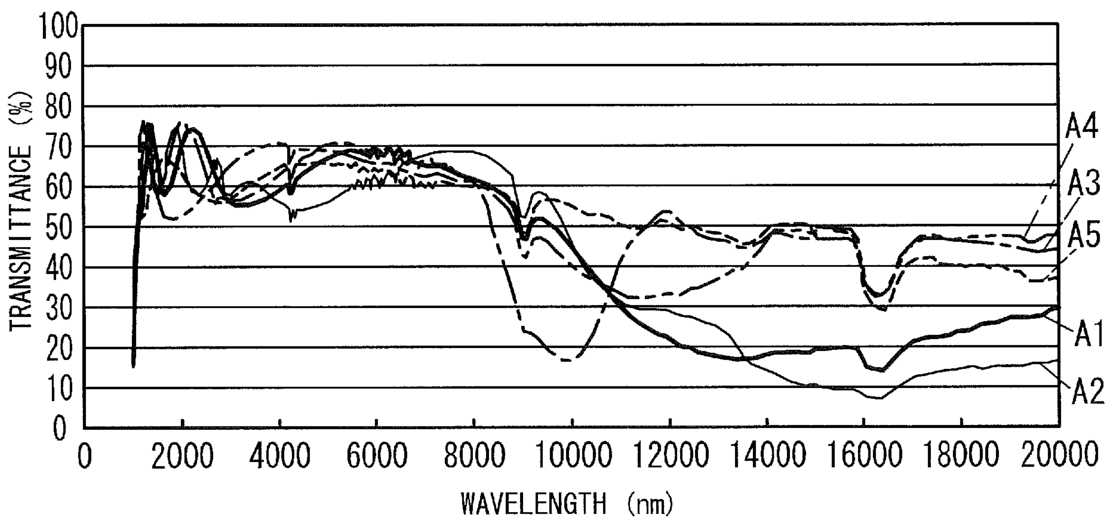
100
90
80
70
60
50
40
30
20
10
0
TRANSMITTANCE (%)
A4
A3
A5
A1
A2
0
2000
4000
6000
8000
10000
12000
14000
16000
18000
20000
WAVELENGTH (nm)

FIG. 12 A

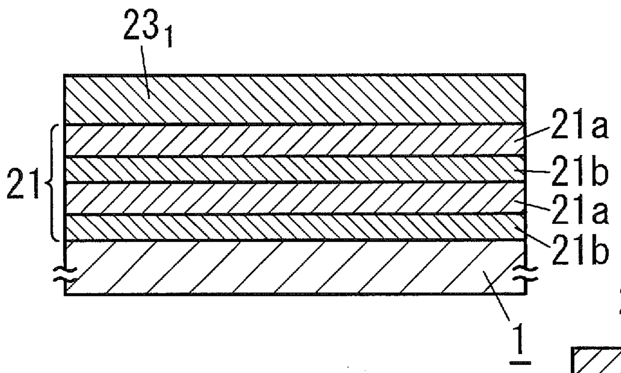


FIG. 12 B

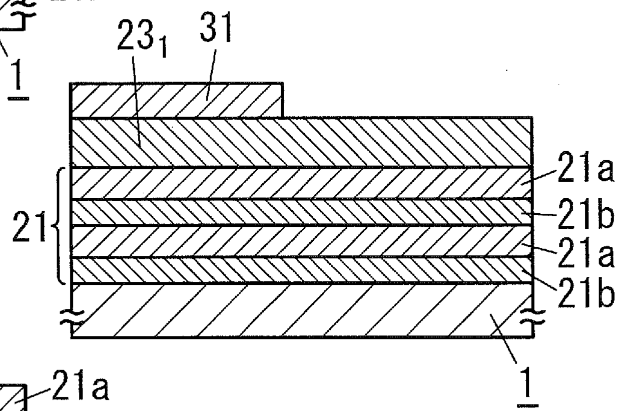


FIG. 12 C

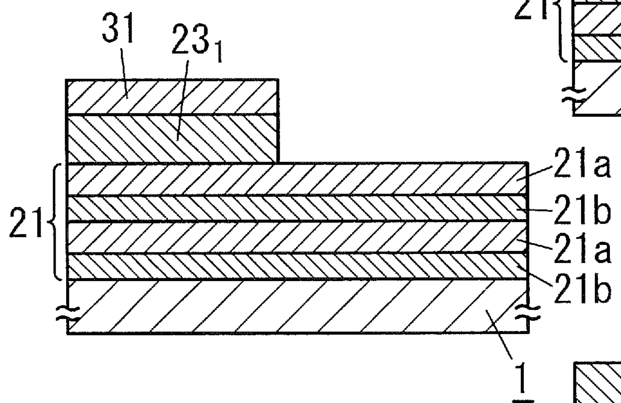


FIG. 12 D

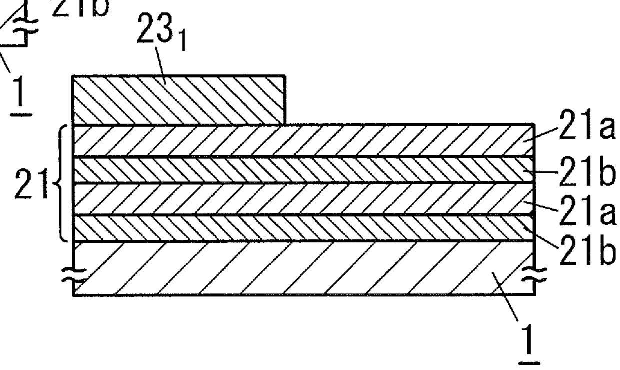


FIG. 12 E

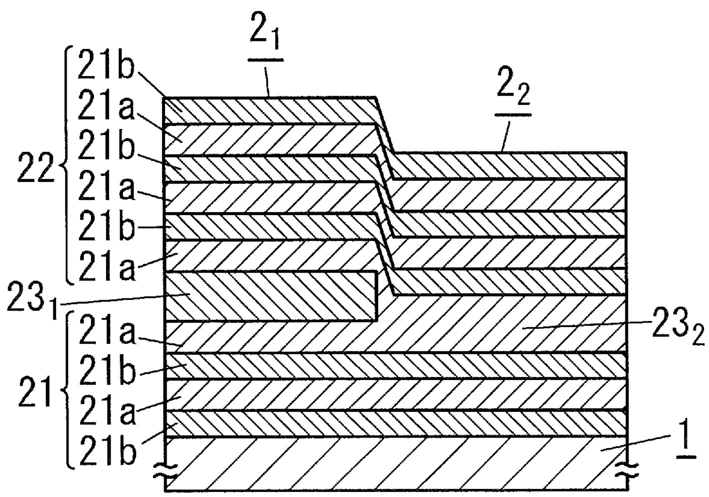

FIG. 13

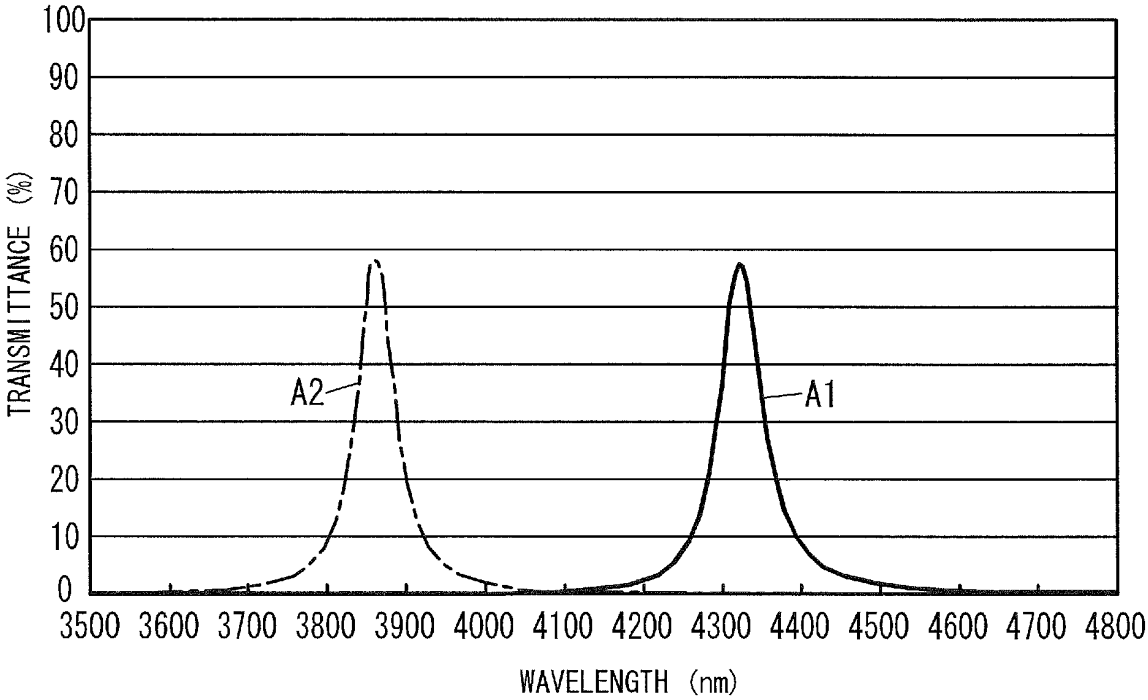
100
90
80
70
60
50
40
30
20
10
0
TRANSMITTANCE (%)
A2
A1
3500 3600 3700 3800 3900 4000 4100 4200 4300 4400 4500 4600 4700 4800
WAVELENGTH (nm)

FIG. 14

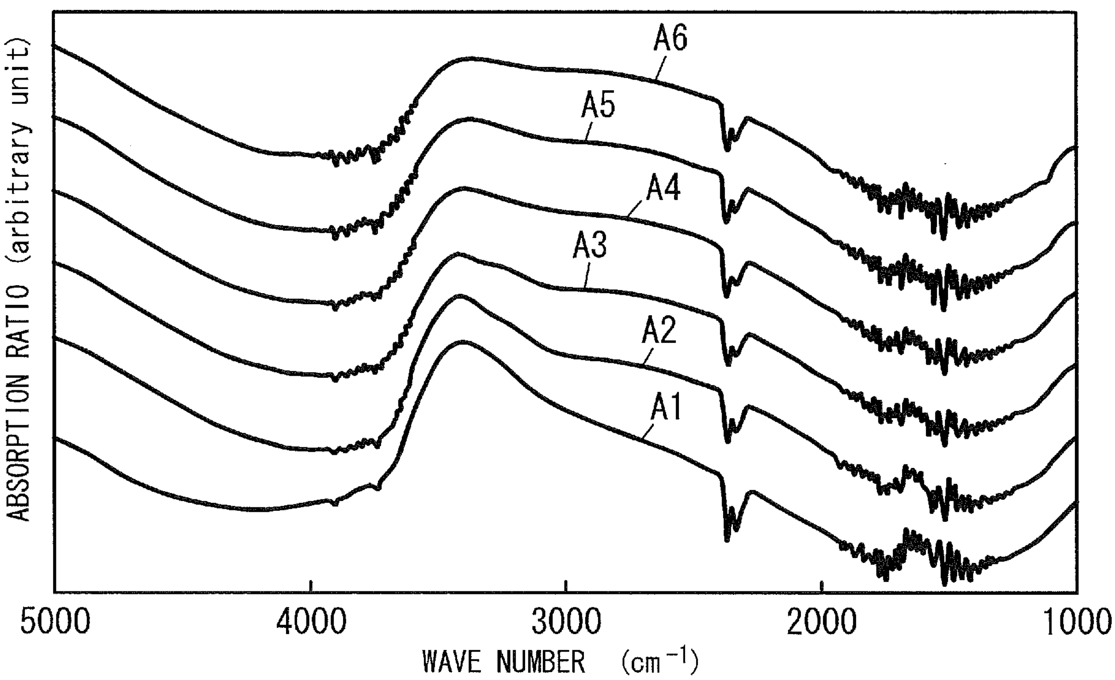
ABSORPTION RATIO (arbitrary unit)
A6
A5
A4
A3
A2
A1
5000
4000
3000
2000
1000
WAVE NUMBER (cm⁻¹)

FIG. 15 A

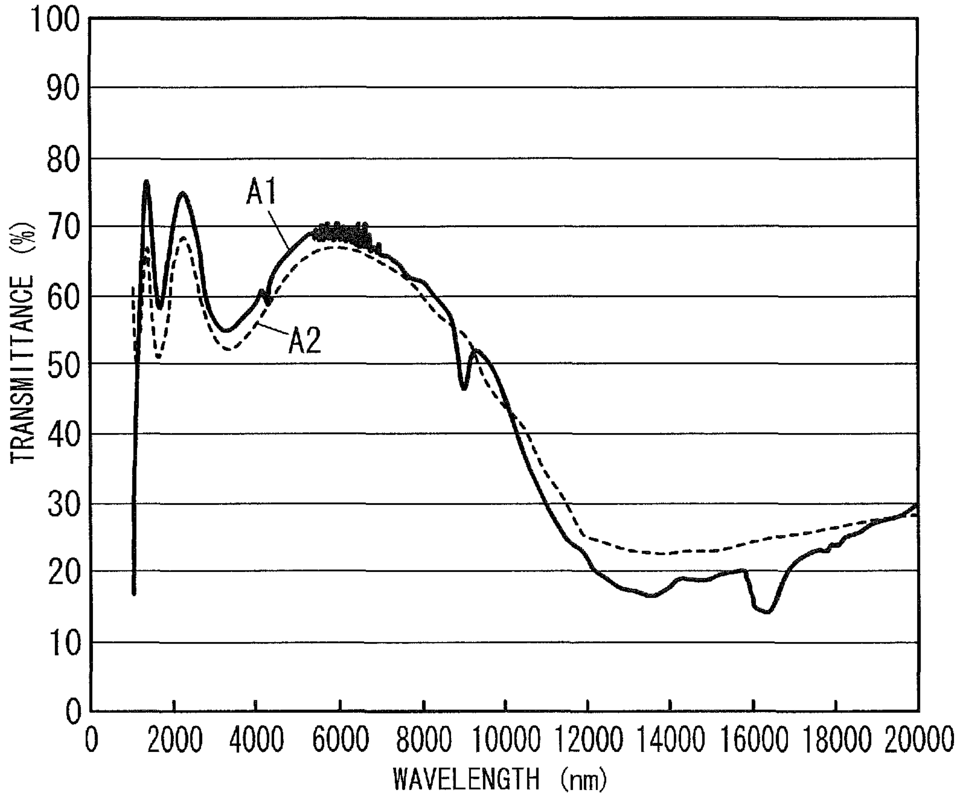


FIG. 15 B

| WAVELENGTH (nm) | REFRACTIVE INDEX | ABSORPTION COEFFICIENT |
|---|---|---|
| 350 | 1.6870 | 0.0000 |
| 400 | 1.6800 | 0.0000 |
| 450 | 1.6770 | 0.0000 |
| 500 | 1.6730 | 0.0000 |
| 550 | 1.6710 | 0.0000 |
| 600 | 1.6700 | 0.0000 |
| 650 | 1.6680 | 0.0000 |
| 700 | 1.6670 | 0.0000 |
| 4000 | 1.6670 | 0.0000 |
| 6000 | 1.5800 | 0.0000 |
| 7500 | 1.5600 | 0.0200 |
| 9000 | 1.5500 | 0.1000 |
| 10500 | 1.5400 | 0.3500 |
| 11250 | 1.5300 | 0.6000 |
| 12000 | 1.5250 | 0.9500 |
| 13500 | 1.5250 | 1.2000 |
| 15000 | 1.5250 | 1.3000 |

FIG. 16

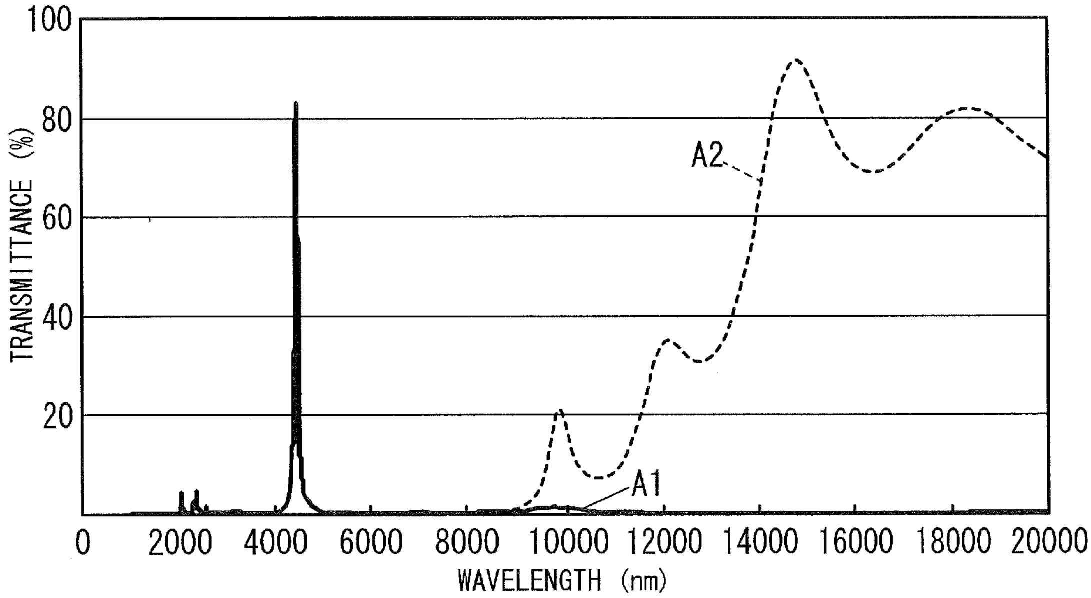
100
80
60
40
20
TRANSMITTANCE (%)
A2
A1
0
2000
4000
6000
8000
10000
12000
14000
16000
18000
20000
WAVELENGTH (nm)

FIG. 17

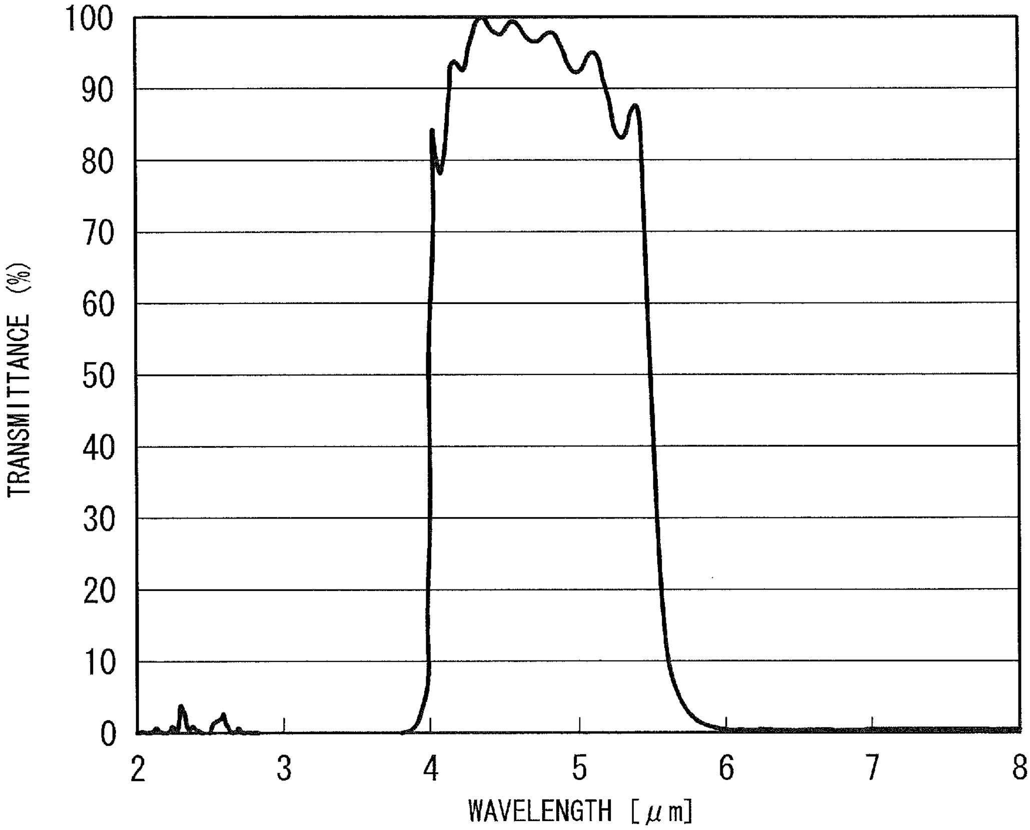
100
90
80
70
60
50
40
30
20
10
0
TRANSMITTANCE (%)
2
3
4
5
6
7
8
WAVELENGTH [μm]

FIG. 18

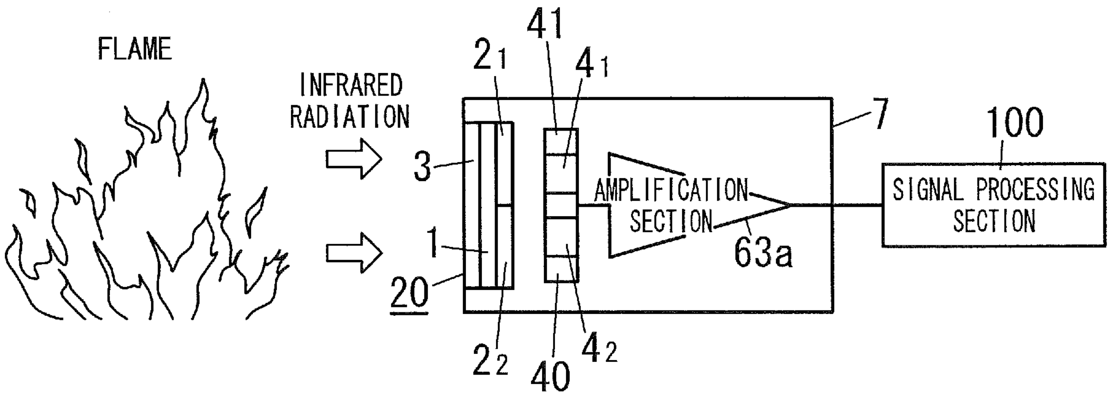
FLAME
INFRARED RADIATION
41
2 1
4 1
7
100
3
SIGNAL PROCESSING SECTION
AMPLIFICATION SECTION
1
63a
20
2 2
40
4 2

FIG. 19

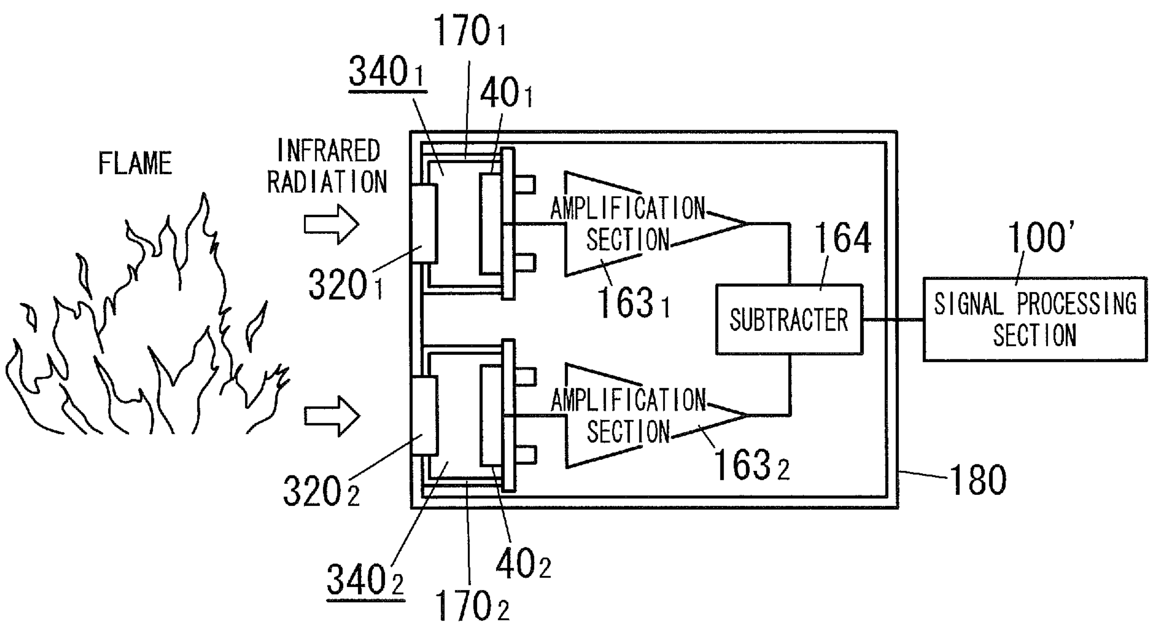
170 1
340 1
40 1
FLAME
INFRARED RADIATION
AMPLIFICATION SECTION
164
100'
320 1
163 1
SUBTRACTER
SIGNAL PROCESSING SECTION
AMPLIFICATION SECTION
163 2
320 2
180
340 2
40 2
170 2

FIG. 20

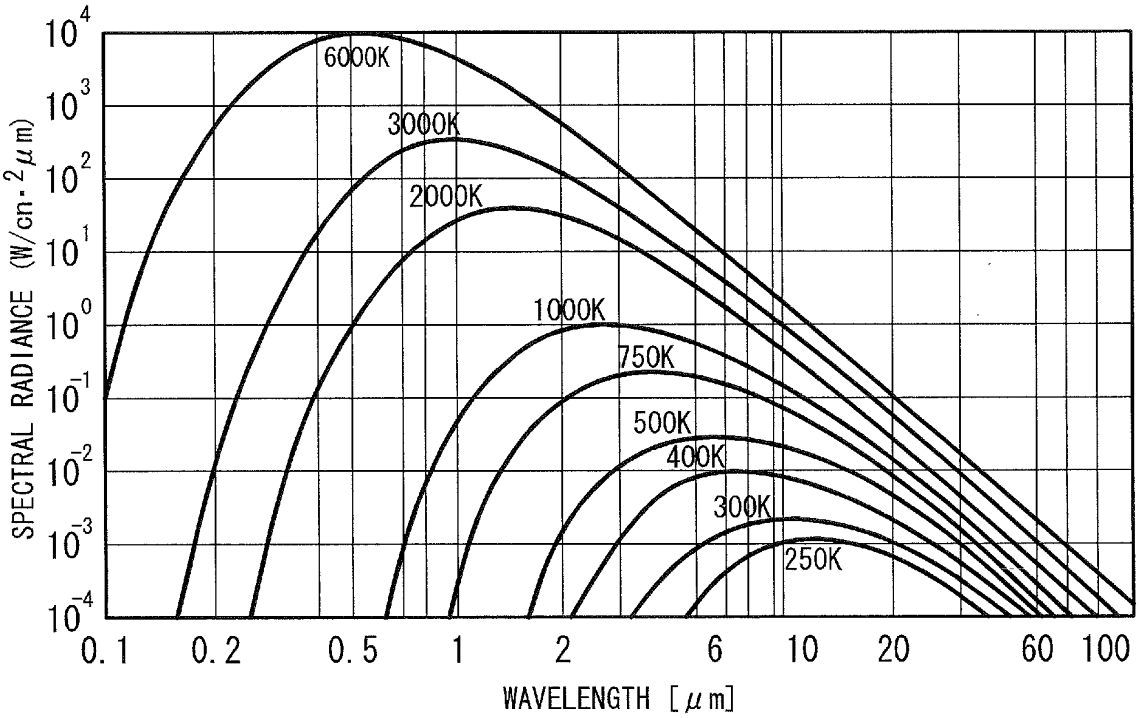
6000K
3000K
2000K
1000K
750K
500K
400K
300K
250K
SPECTRAL RADIANCE (W/cm·2μm)
10^4
10^3
10^2
10^1
10^0
10^-1
10^-2
10^-3
10^-4
0.1 0.2 0.5 1 2 6 10 20 60 100
WAVELENGTH [μm]

FIG. 21

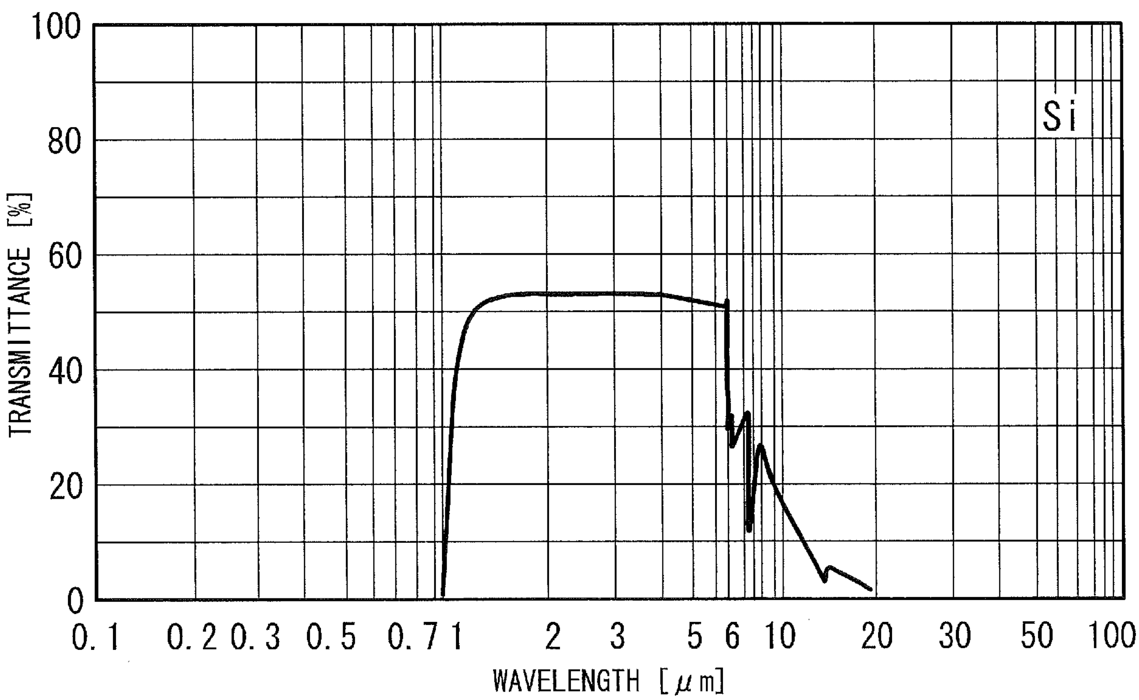
Si
TRANSMITTANCE [%]
100
80
60
40
20
0
0.1 0.2 0.3 0.5 0.7 1 2 3 5 6 10 20 30 50 100
WAVELENGTH [μm]

FIG. 22

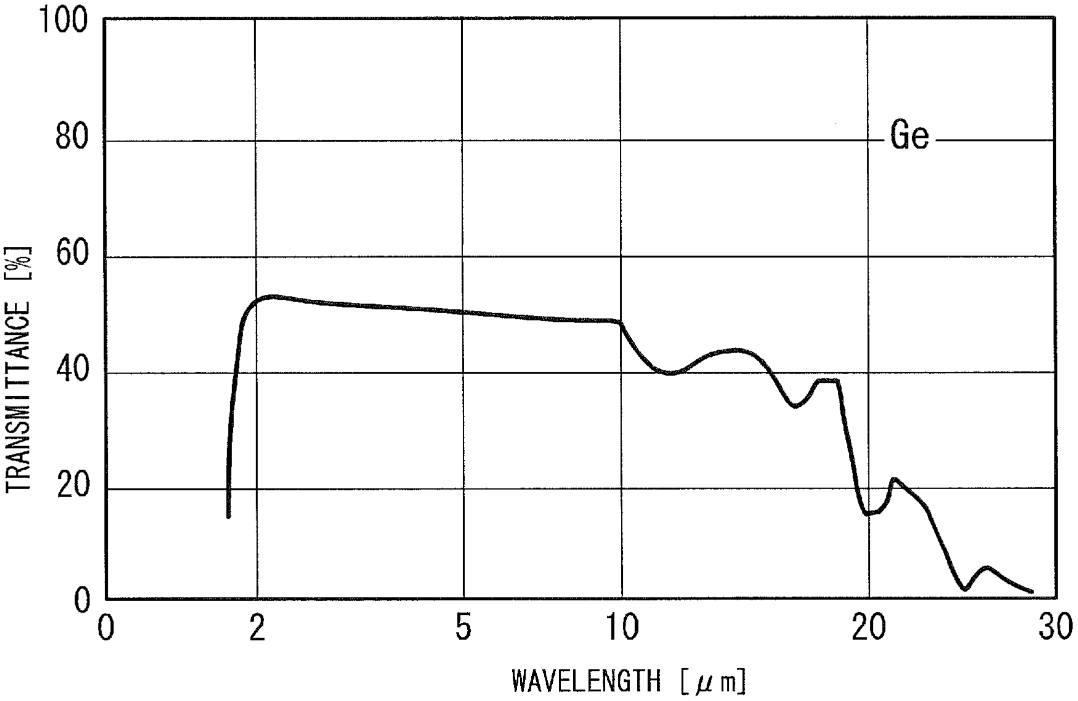
100
80
60
40
20
0
TRANSMITTANCE [%]
Ge
0
2
5
10
20
30
WAVELENGTH [μm]

FIG. 23

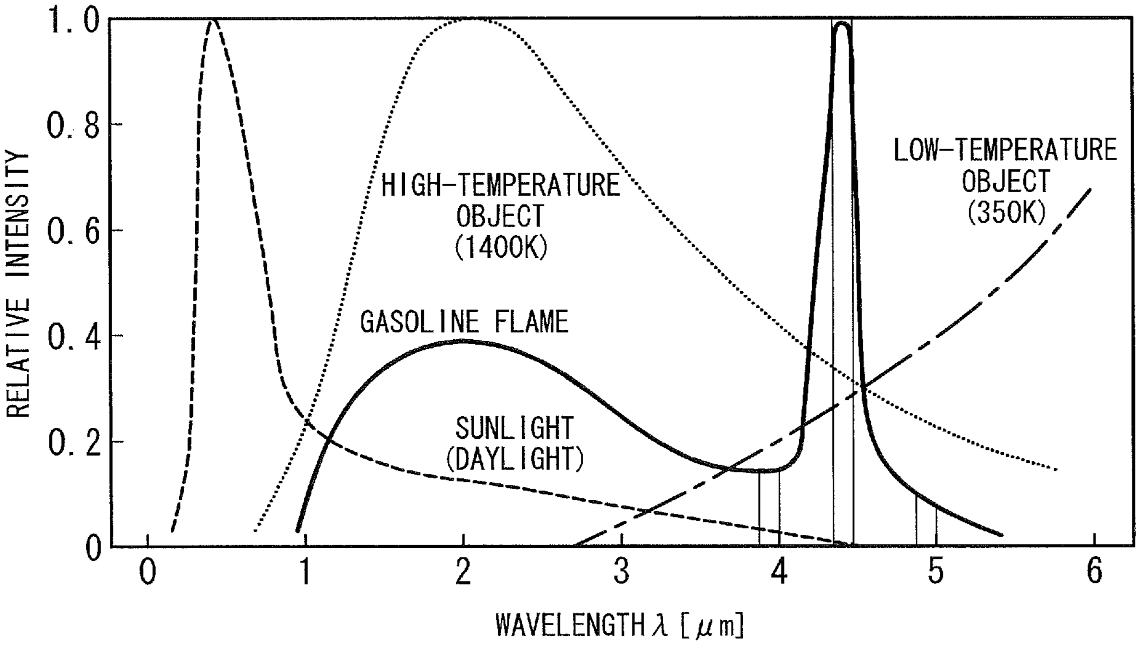
1.0
0.8
0.6
0.4
0.2
0
RELATIVE INTENSITY
HIGH-TEMPERATURE
OBJECT
(1400K)
GASOLINE FLAME
SUNLIGHT
(DAYLIGHT)
LOW-TEMPERATURE
OBJECT
(350K)
0
1
2
3
4
5
6
WAVELENGTH λ [μm]

FIG. 24

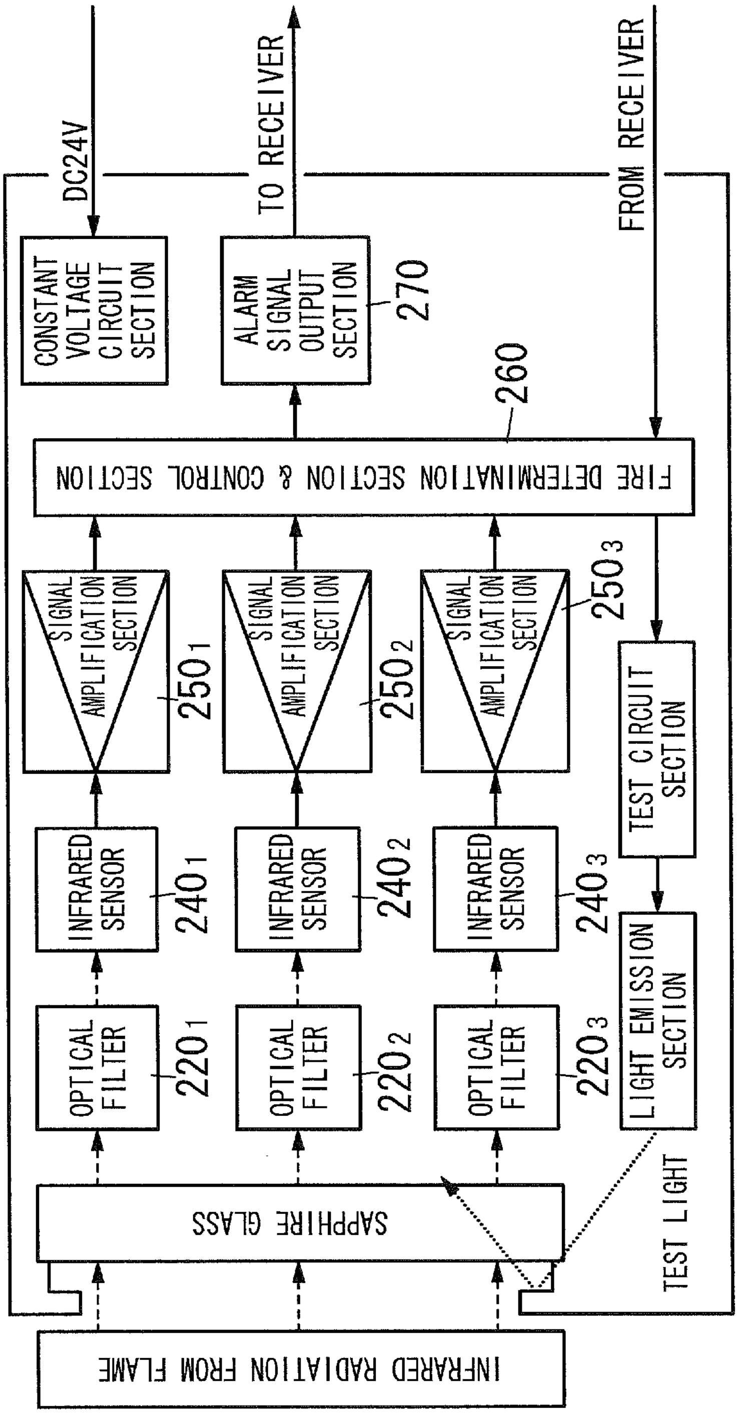
DC24V
TO RECEIVER
FROM RECEIVER
CONSTANT VOLTAGE CIRCUIT SECTION
ALARM SIGNAL OUTPUT SECTION
270
260
FIRE DETERMINATION SECTION & CONTROL SECTION
SIGNAL AMPLIFICATION SECTION
250₁
250₂
250₃
TEST CIRCUIT SECTION
INFRARED SENSOR
240₁
240₂
240₃
OPTICAL FILTER
220₁
220₂
220₃
LIGHT EMISSION SECTION
SAPPHIRE GLASS
TEST LIGHT
INFRARED RADIATION FROM FLAME

FIG. 25 A

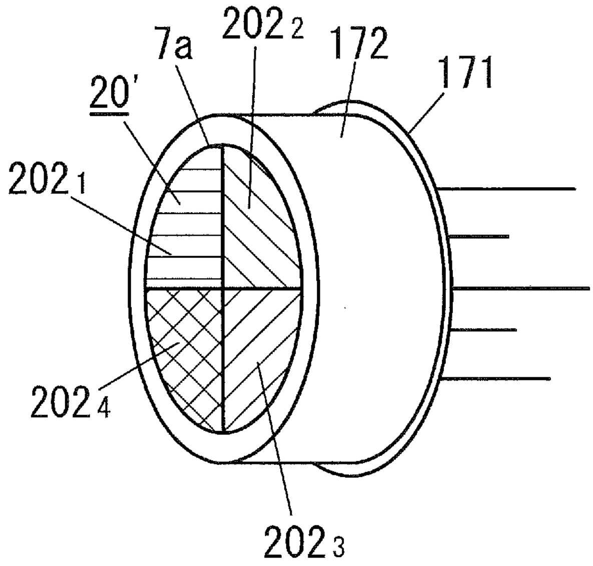


FIG. 25 B

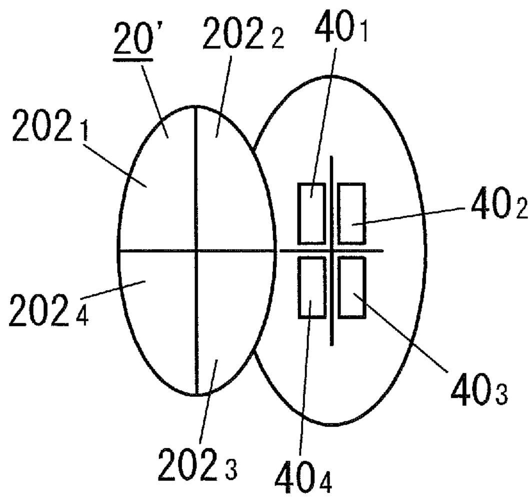

FIG. 26

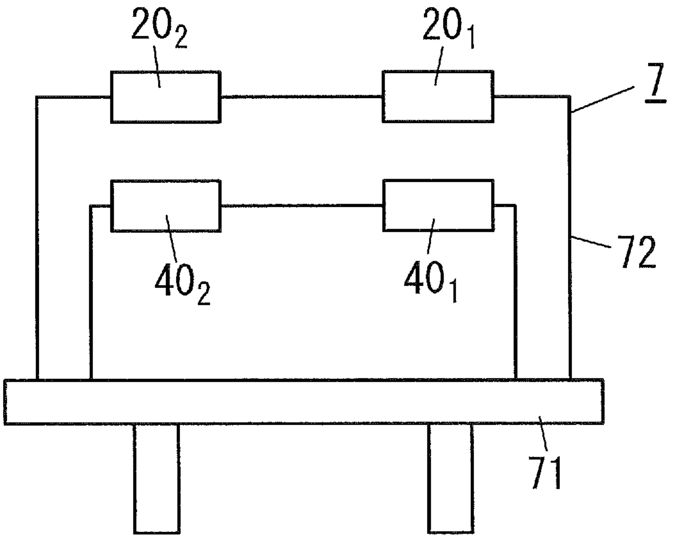
$20_2$
$20_1$
7
$40_2$
$40_1$
72
71

FIG. 27

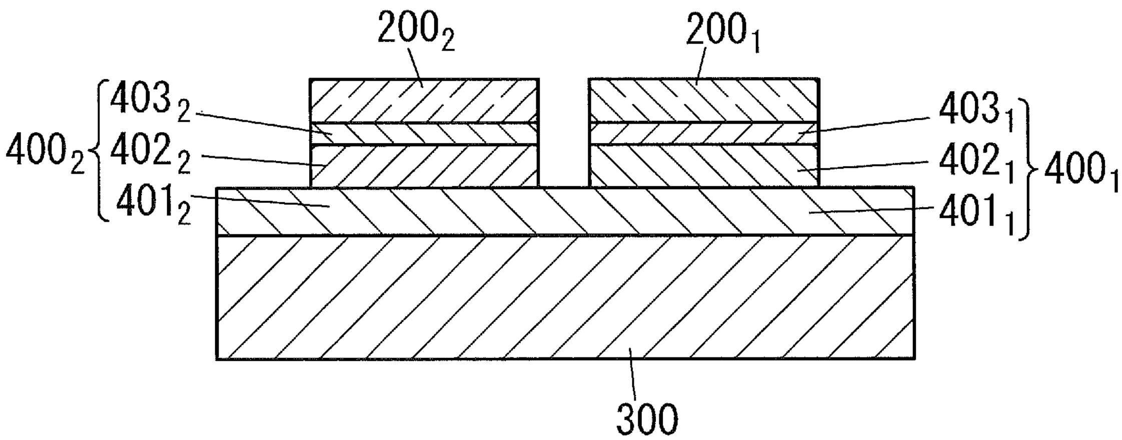
$200_2$
$200_1$
$403_2$
$400_2$
$402_2$
$401_2$
$403_1$
$402_1$
$400_1$
$401_1$
300

FIG. 28 A

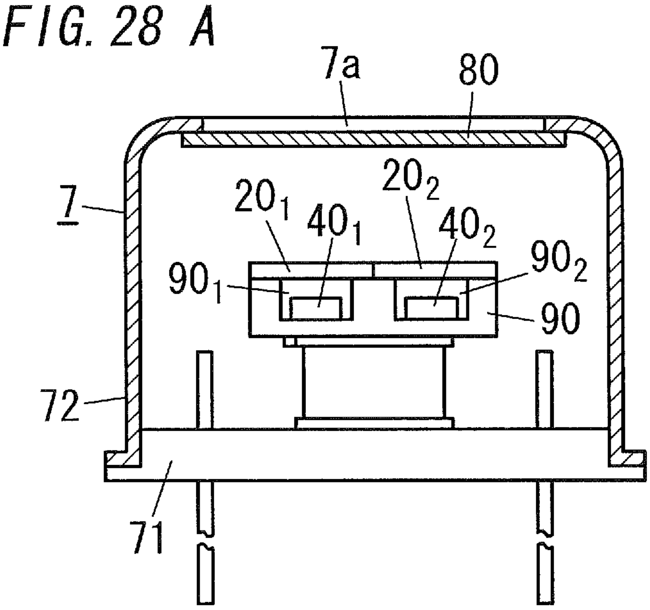


FIG. 28 B

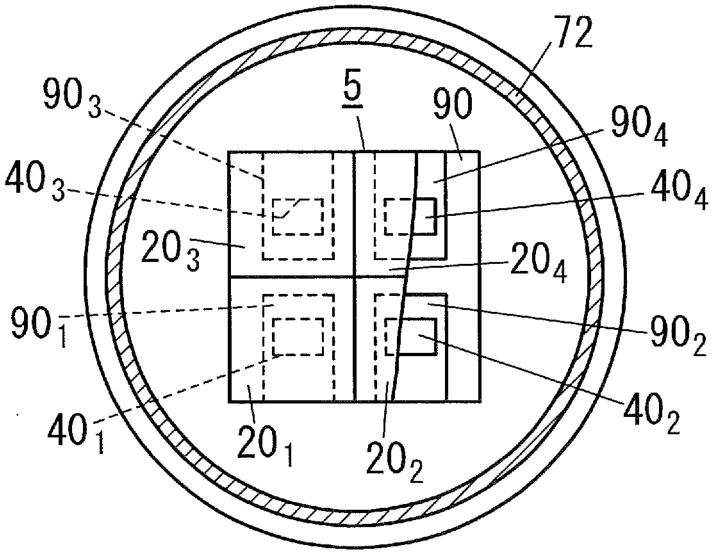


FIG. 28 C

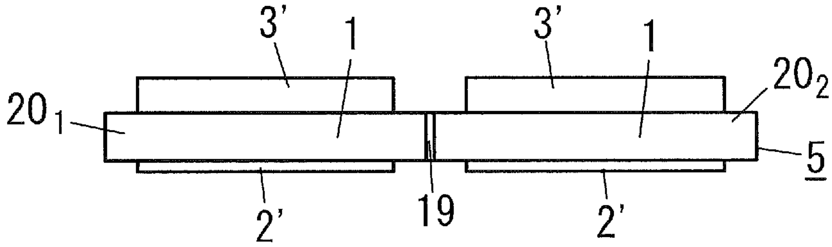

## INTERNATIONAL SEARCH REPORT

International application No.
PCT/JP2010/071813

A. CLASSIFICATION OF SUBJECT MATTER
*G01J1/02*(2006.01)i, *G01J1/04*(2006.01)i, *G08B17/12*(2006.01)i

According to International Patent Classification (IPC) or to both national classification and IPC

B. FIELDS SEARCHED

Minimum documentation searched (classification system followed by classification symbols)
G01J1/02-1/04, G01J1/42, G01J5/00-5/02, G01J5/08, G01J5/34, G01N21/35, G02B5/28, H01L31/00-31/02, H01L31/08, G08B17/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | CD-ROM of the specification and drawings annexed to the request of Japanese Utility Model Application No. 026581/1992(Laid-open No. 081667/1993) (KGK Corp.), 05 November 1993 (05.11.1993), entire text; fig. 1 to 4 (Family: none) | 1-5 |
| Y | JP 10-339698 A (Itachibori Mfg. Co., Ltd.), 22 December 1998 (22.12.1998), entire text; fig. 1 to 9 (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 February, 2011 (14.02.11) | 01 March, 2011 (01.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/071813

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-078510 A (Yokogawa Electric Corp.), 24 March 1998 (24.03.1998), paragraphs [0003], [0010] to [0012]; fig. 2 to 4 (Family: none) | 1-5 |
| Y | JP 05-249313 A (Fujikura Ltd.), 28 September 1993 (28.09.1993), entire text; fig. 1 to 7 (Family: none) | 1-5 |
| Y | JP 07-159234 A (Horiba, Ltd.), 23 June 1995 (23.06.1995), entire text; fig. 1 to 7 (Family: none) | 4-5 |
| Y | JP 2007-225455 A (Matsushita Electric Works, Ltd.), 06 September 2007 (06.09.2007), entire text; fig. 1 to 8 (Family: none) | 5 |
| E,A | WO 2010/150787 A1 (Panasonic Electric Works Co., Ltd.), 29 December 2010 (29.12.2010), entire text; fig. 1 to 43 & JP 2011-027699 A | 1-5 |
| E,A | WO 2010/092898 A1 (Panasonic Electric Works Co., Ltd.), 19 August 2010 (19.08.2010), entire text; fig. 1 to 21 & JP 2010-186145 A & JP 2010-186146 A & JP 2010-186147 A | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H378899 B
- JP H772078 B
- JP H3205521 B
- JP H10281866 B


### Non-patent literature cited in the description


- The Society of Heating, Air-Conditioning and Sanitary Engineers of Japan. *2. Three-wavelength Infrared Flame Detector,* 21 March 2009